# EUROPÄISCHE PATENTSCHRIFT

(11) **EP 2 643 245 B1**
(45) Veröffentlichungstag und Bekanntmachung des Hinweises auf die Patenterteilung: **20.07.2016**
(21) Anmeldenummer: 11770998.0
(22) Anmeldetag: 07.10.2011
(51) Int. Cl.: B65G 17/06, B65G 17/38, F16G 13/10, B65G 21/22, B65G 39/20

(54) **FÖRDEREINRICHTUNG**
CONVEYING DEVICE
DISPOSITIF TRANSPORTEUR

(30) Priorität: 26.11.2010 CH 19912010
(43) Veröffentlichungstag der Anmeldung: 02.10.2013
(73) Patentinhaber: Ferag AG, 8340 Hinwil (CH)
(72) Erfinder: STUDER, Beat, CH-8340 Hinwil (CH)
(74) Vertreter: Frei Patent Attorneys
(86) Internationale Anmeldenummer: PCT/CH2011/000241
(87) Internationale Veröffentlichungsnummer: WO 2012/068691

(56) Entgegenhaltungen:
- EP-A1- 0 218 237
- EP-A1- 0 355 080
- EP-A1- 1 321 389
- EP-A1- 1 437 312
- WO-A1-02/34650
- WO-A2-00/27732
- WO-A2-2006/069163
- DE-B- 1 194 319
- DE-B- 1 270 498
- DE-U1- 29 516 872
- FR-A- 1 050 098
- FR-A- 1 452 213
- GB-A- 734 753
- JP-A- 2004 269 259
- MC-A- 328
- US-A- 3 550 755
- US-A- 4 638 906
- US-A1- 2006 207 470

## Beschreibung

Die Erfindung betrifft eine Förderkette für ein Fördermittel einer Fördereinrichtung, enthaltend eine Mehrzahl von miteinander verbundenen Kettengliedern, wobei die Kettenglieder über Gelenkverbindungen jeweils um eine erste Achse und um eine, senkrecht zur ersten Achse ausgerichteten zweiten Achse schwenkbar miteinander zur Förderkette verbunden sind. Die Erfindung betrifft ferner ein Kettenglied für eine erfindungsgemässe Förderkette.

### STAND DER TECHNIK

Kettenförderer, bei welchen ein Förderorgan, wie zum Beispiel Greifer oder Plattenelemente, mittels einer Förderkette entlang einer Umlaufbahn durch eine Fördereinrichtung geführt werden, sind allgemein bekannt.

So beschreibt zum Beispiel die Schrift EP-A-1 975 093 eine aus Innenkettengliedern und Aussenkettengliedern gebildete Seitenbogenförderkette. Die einzelnen Kettenglieder sind über eine Art kardanische Verbindung miteinander verbunden und weisen zwei senkrecht zueinander stehende Schwenkachsen auf. Die Aussenkettenglieder weisen überdies Verbindungsstellen auf, über welche Tragplatten formschlüssig befestigt werden können. Die Führung der Förderkette geschieht hier über hülsenförmige Vorsprünge an den Aussenkettengliedern, welche einer Führungsbahn aufliegen. Diese Förderkette weist den Nachteil auf, dass diese immer noch aus einer Vielzahl von unterschiedlichen Bauteilen, wie z. B. Aussenkettengliedern und Innenkettengliedern aufgebaut ist.

In der Schrift US 5,911, 305 ist ein modulares Fördersystem mit einem modular aufgebauten Förderband beschrieben. Das Förderband selbst ist aus einzelnen Gelenken aufgebaut und weist zur Seite hin Biegeabschnitte auf, welche um einen Führungsstreifen greifen. Das Fördersystem ist zwar ebenfalls modular aufgebaut, doch eignen sich die einzelnen Bauelemente bzw. Glieder nur zur Konstruktion eines bestimmten Bandförderers.

Die DE 2118232 beschreibt eine Fördereinrichtung mit einer Förderkette, welche aus gleichartigen Kettengliedern aufgebaut ist. Die Kettenglieder weisen jeweils eine gabelförmige Aufnahme auf, in welche ein Kupplungsstück eines benachbarten Kettengliedes eingreift, das über einen als Gelenkachse ausgebildeten Rundstab mit der gabelförmigen Aufnahme verbunden ist. Die Kette hat hier die ausschliessliche Funktion eines Zugmittels. Andere Funktionen sind der Förderkette nicht zugeteilt. Das Förderorgan, hier aus Platten bestehend, ist an den seitlich von den Kettengliedern wegführenden Rundstäben befestigt.

Auch die EP-A-1 902 978 beschreibt einen Plattenförderer mit einzelnen Trägerplatten, welche beweglich miteinander verbunden sind. An den Trägerplatten sind Laufrollen befestigt. Die Trägerplatten bilden also selbst die Kettenglieder aus.

Die Veröffentlichungsschrift FR 1 452 213 A beschreibt eine gattungsgemäße Förderkette mit einer Mehrzahl von Kettengliedern. Die Kettenglieder bilden jeweils einen Kupplungskörper sowie eine Aufnahme zur Aufnahme des Kupplungskörpers eines benachbarten Kettengliedes aus.

### DARSTELLUNG DER ERFINDUNG

Aufgabe vorliegender Erfindung ist es nun, eine Förderkette vorzuschlagen, welche aus möglichst wenig unterschiedlichen Bauteilen besteht, sowie robust und einfach anzutreiben ist. Ferner soll das Fördermittel zuverlässig und verschleissarm bewegbar sein. Die Verbindung zwischen den einzelnen Kettengliedern soll zudem einfach und möglichst ohne Werkzeug herstellbar sein. Trotzdem soll die Verbindung in verschiedenen Schwenkpositionen zuverlässig halten. Ferner soll die Förderkette flexibel ausgelegt sein, so dass sich mit derselben Förderkette unterschiedliche Fördersysteme, wie z. B. Greiferförderer oder Plattenförderer realisieren lassen.

Die Aufgabe wird durch die Förderkette gemäss Anspruch 1 und das Kettenglied gemäss Anspruch 14 gelöst. Die abhängigen Ansprüche beinhalten bevorzugte Weiterbildungen der Erfindung.

Die Förderkette zeichnet sich erfindungsgemäss dadurch aus, dass diese bezüglich Formgebung vorzugsweise aus baugleichen Kettengliedern aufgebaut ist und die Kettenglieder jeweils an einem ersten Endabschnitt eine Aufnahme und an einem zweiten Endabschnitt einen, in die Aufnahme eines benachbarten Kettengliedes eingreifenden Kupplungskörper aufweisen. Die Aufnahme und der Kupplungskörper sind nun so gestaltet, dass diese zur Ausbildung der Gelenkverbindung mittels einer Steck-Dreh-Bewegung miteinander verbunden werden können. Neben den erwähnten Endabschnitten weisen die Kettenglieder jeweils zwischen dem ersten und zweiten Endabschnitt bevorzugt einen Mittelabschnitt auf. Der Begriff "benachbartes Kettenglied" bedeutet hier das vor- oder nachlaufende Kettenglied in der Förderkette.

Der Begriff "baugleich bezüglich Formgebung" bezieht sich insbesondere auf konstruktive identisch ausgebildete Endabschnitte sowie Mittelabschnitte zur Anbindung eines Förderorgans. Bezüglich möglicher Anschlussschnittstellen zur Anbringung von Laufrollen, wie weiter unten beschrieben, brauchen die Kettenglieder nicht identisch zu sein, sind es jedoch bevorzugt ebenfalls.

Erfindungsgemäß umfasst der Kupplungskörper einen Gelenkkopf und die Aufnahme eine Gelenkpfanne. Die Gelenkpfanne umgreift den Gelenkkopf in Betriebsposition vorzugsweise über dessen Äquator hinaus. In der Medizinaltechnik wird bei solch einer Verbindung auch von Nussgelenk gesprochen. Der Gelenkkopf ist bevorzugt über einen Halsabschnitt mit dem Grundkörper, d.h. dem Mittelabschnitt, des Kettengliedes verbunden. Der Gelenkkopf ist zweckmässig starr mit dem Grundkörper des Kettengliedes verbunden. Die Gelenkpfanne weist eine Einführöffnung zum Einführen des Gelenkkopfes in die Gelenkpfanne auf. Die Einführöffnung ist hierzu bevorzugt zum benachbarten Kettenglied hin gerichtet. Der Gelenkkopf, die Gelenkpfanne und die Einführöffnung sind nun bevorzugt so ausgebildet, dass der Gelenkkopf zur Ausbildung der Gelenkverbindung über eine Steck-Bewegung durch die Einführöffnung in die Gelenkpfanne eingeschoben und mittels einer anschliessenden Drehbewegung gegen ein Herausgleiten entgegen der Einschubrichtung gesichert werden kann. Die Steckbewegung erfolgt bevorzugt in Längsrichtung des Fördergliedes bzw. der Förderkette.

Hierzu ist die Einführöffnung und der Gelenkkopf bevorzugt so ausgestaltet, dass der Gelenkkopf und somit das dazugehörige Kettenglied nur in einer bestimmten Winkelposition oder in einem bestimmten Winkelbereich relativ zum Fügepartner, d.h. dem benachbarten Kettenglied, um die Längsachse der Förderkette bzw. des Kettengliedes verdreht in die Gelenkpfanne des benachbarten Kettengliedes einführbar ist. Diese Winkelposition bzw. dieser Winkelbereich wird so gewählt bzw. eingestellt, dass die Kettenglieder während des Betriebes der Förderkette nicht entkoppelt werden können. D.h. die genannte Winkelposition bzw. der genannte Winkelbereich entspricht einer Verdrehung zweier miteinander gekoppelten Kettenglieder gegeneinander, welche diese in sämtlichen Schwenkpositionen relativ zueinander während des Betriebs der Förderkette nie einnehmen werden. Dies Betrifft das Verschwenken der Kettenglieder relativ zueinander um die erste und zweite Schwenkachse A1, A2.

Die Gelenkverbindung kann z. B. so ausgestaltet sein, dass die Kettenglieder relativ zueinander 360° um die Längsachse L des Kettengliedes drehbar sind. Die Gelenkverbindung ist ferner bevorzugt so ausgestaltet sein, dass die Kettenglieder relativ zueinander lediglich in einem eingeschränkten Winkelbereich von z. B. 5° bis 30° um die zweite Schwenkachse A2 schwenkbar sind. Die Schwenkbarkeit kann zum Beispiel durch die Ausgestaltung des Randes der Aufnahme bzw. der Gelenkpfanne begrenzt sein.

Der Kupplungskörper, die Aufnahme und die Einführöffnung sind vorteilhaft so gestaltet, dass zwei Kettenglieder nur dann miteinander verbunden werden können, wenn diese in einem Winkel im Bereich von 45° bis 135°, insbesondere von rund 90°, um ihre Längsachse (L) relativ zueinander verdreht sind. Dies trifft insbesondere auf die Ausführungsform einer Gelenkverbindung mit einem Gelenkkopf, einer Gelenkpfanne und einer schlitzartige Öffnung wie oben beschrieben zu.

Erfindungsgemäß weist der Kupplungskörper einen Gelenkkopf mit zwei gegenüber liegenden, abgeflachten Seiten auf. Die abgeflachten Seiten bilden bevorzugt zwei ebene Flächen aus. Die Flächen können parallel zueinander liegen. Die Gelenkpfanne ihrerseits weist eine, zum benachbarten Kettenglied weisende, schlitzartige Einführöffnung zum Einschieben des Gelenkkopfes auf. Die schlitzartige Öffnung sowie der seitlich abgeflachte Gelenkkopf sind so ausgebildet und aufeinander abgestimmt, dass der Gelenkkopf nur dann in die Gelenkpfanne eingeführt werden kann, wenn die beiden Elemente in einem bestimmten Winkel oder Winkelbereich zueinander stehen. Der Begriff "Winkel" bedeutet hier einen Drehwinkel um eine in Längsrichtung der Förderkette verlaufende Drehachse, welche senkrecht zur Achse A1 und A2 steht. Sind die beiden Kettenglieder gleich ausgerichtet, so beträgt der Drehwinkel 0°. Die Breite der schlitzartigen Öffnung ist somit an die Breite des Gelenkkopfes zwischen den beiden abgeflachten Seiten angepasst. In einer vorteilhaften Ausbildung entspricht die schlitzartige Öffnung dem (grössten) Querschnitt des zweiseitig abgeflachten Gelenkkopfes oder ist etwas grösser. D.h., die schlitzartige Einführöffnung und die Querschnittsform des Gelenkkopfes sind kongruent.

Die schlitzartige Öffnung und der zweiseitig abgeflachte Gelenkkopf sind nun so am Kettenglied angeordnet, dass die Winkelpositionen der Gelenkpfanne und des Gelenkkopfs relativ zueinander in Betriebsposition ausserhalb des Winkels bzw. des Winkelbereichs liegt, welche die Teile zum Zusammenfügen einnehmen müssen. Zum Zusammenfügen zweier Kettenglieder müssen diese in eine Winkelposition relativ zueinander gebracht werden, in welcher der abgeflachte Gelenkkopf auf die schlitzartige Öffnung ausgerichtet ist.

Der Gelenkkopf weist eine kugelförmige Grundform mit den erwähnten abgeflachten Seiten auf. Die Gelenkpfanne ist zweckmässig gegengleich zur Grundform des Gelenkkopfes ausgebildet. Der Halsabschnitt weist einen geringeren Durchmesser auf als der maximale Durchmesser des Gelenkkopfes. Der Durchmesser des Halsabschnittes kann ferner der Breite des Gelenkkopfes zwischen den beiden abgeflachten Seiten entsprechen oder kleiner sein.

Die Förderkette kann bezüglich Formgebung und Werkstoff aus baugleichen Kettengliedern aufgebaut sein. Die Kettenglieder sind bevorzugt einteilig ausgebildet. Die Kettenglieder können als Ein- oder Mehrkomponenten-Kettenglieder, d.h., aus einem oder mehreren, verschiedenen Werkstoffen hergestellt sein. Einkomponenten-Kettenglied bedeutet, dass das gesamte Bauteil aus dem gleichen Werkstoff hergestellt ist. Mehrkomponenten-Kettenglied bedeutet hingegen, dass das Kettenglied aus einer Kombination mehrerer, z. B. zwei verschiedener Werkstoffe aufgebaut und einzelne Abschnitte bzw. Teile des Kettengliedes aus unterschiedlichen Werkstoffen hergestellt sind. Ein Mehrkomponenten-Kettenglied kann z. B. über Einlegeteile aus einem anderen Werkstoff als der Grundkörper erhalten werden. Ferner kann ein Mehrkomponenten-Kettenglied auch über ein Spritzgiessverfahren erhalten werden, in welchem zwei oder mehrere unterschiedliche Kunststoffwerkstoffe in mehreren Spritzgiessschritten zu einem einteiligen Bauteil verarbeitet werden. Es ist überdies auch möglich, dass das Kettenglied teil- oder vollflächig mit einem anderen Werkstoff beschichtet wird. Dieser Werkstoff hat zum Beispiel reibungsvermindernde Eigenschaften. Der Werkstoff kann z. B. PTFE sein oder diesen enthalten. So kann z. B. vorgesehen sein, dass die Kettenglieder bezüglich Formgebung und Werkstoff baugleich sind und entweder der Kupplungskörper oder die Aufnahme mit einem anderen Werkstoff beschichtet ist. Es kann auch vorgesehen sein, dass zwei Ausführungsarten von bezüglich Formgebung baugleichen Kettengliedern vorgesehen sind. Eine Ausführungsart von Kettengliedern weist dabei eine teil- oder vollflächige Beschichtung mit einem anderen Werkstoff auf. Die andere Ausführungsart von Kettengliedern weist vorzugsweise keine Beschichtung auf. In diesem Fall wären sowohl der Kupplungskörper als auch die Aufnahme beschichtet. Die Beschichtung kann als separater Verfahrensschritt im Anschluss an ein Spritzgiessverfahren vorgesehen sein. Die Beschichtung kann auch ein Verfahrensschritt während des Spritzgiessverfahrens sein.

Die einzelnen, unterschiedlichen Werkstoffe eines solchen Bauteils können Eigenschaften aufweisen, welche den unterschiedlichen funktionellen Aufgaben, die einzelne Bereiche eines Bauteils erfüllen müssen, gerecht werden.

Der Werkstoff oder ein Werkstoff, aus welchem Teile des Kettengliedes oder das gesamte Kettenglied hergestellt sein können, ist bevorzugt ein Kunststoff oder ein verstärkter Kunststoff. Der Werkstoff oder ein Werkstoff kann jedoch auch Metall, z. B. ein Eisenmetall, wie Stahl, oder Aluminium sein. Wird das Kettenglied aus Kunststoff hergestellt, so kann dieses z. B. mittels Spritzgiessen hergestellt sein. Wird das Kettenglied aus Metall hergestellt, so kann dieses mittels eines Giessverfahrens hergestellt sein. Die Kettenglieder sind dann entsprechende Metallgussteile.

Es ist auch möglich, dass das Kettenglied aus Kunststoff hergestellt wird und Einlegeteile, wie Führungshülsen, Stifte, Aufnahmen (Gelenkpfanne), Kupplungskörper (Gelenkkopf), Kugellager, kompletten Laufrolle, Rollenkörper, Achskörper, etc. enthalten, welche bereits im Herstellungsverfahren in den Grundkörper, aus z. B. Kunststoff, integriert werden. Die Einlegeteile bestehen dabei aus einem anderen Werkstoff als der Grundkörper, z. B. Metall. Zur Herstellung von Kettengliedern mit Einlegeteilen eignet sich besonders gut ein Spritzgiessverfahren: Es können z. B. Einlegeteile vorgesehen sein, welche in Längsrichtung L orientiert in das Kettenglied eingebettet und dazu ausgelegt sind, Zugkräfte aufzunehmen.

Eine weitere Aufgabe der Erfindung ist es auch, die Reibung zwischen der Aufnahme und dem Kupplungskörper möglichst klein zu halten, um so übermäßigen Verschleiss zu verhindern. Zur Lösung dieses Problems sind verschiedene Ansätze möglich.

Gemäss einer ersten Lösung dieser Aufgabe ist das Kettenglied ein Mehrkomponenten-Kettenglied aus mehreren, bevorzugt zwei verschiedenen Kunststoffwerkstoffen, hergestellt. Das Kettenglied wird trotzdem bevorzugt einteilig produziert. Wenigstens der Gelenkkopf und die Gelenkpfanne sind aus zwei verschiedenen Kunststoffwerkstoffen hergestellt. Die beiden Kunststoffwerkstoffe werden zweckmässig so ausgewählt, dass der Reibungskoeffizient zwischen dem Gelenkkopf und der Gelenkpfanne und demzufolge auch der Verschleiss möglichst tief ist. Die Mehrkomponenten-Kettenglieder, wie z. B. Zweikomponenten-Kettenglieder, aus mehreren, z. B. zwei, unterschiedlichen Kunststoffwerkstoffen lassen sich in einem mehrstufigen Spritzgiessverfahren herstellen. In diesem Fall sind die Kettenglieder vorzugsweise bezüglich Formgebung und Werkstoff baugleich ausgebildet.

Gemäss einer besonders bevorzugten Ausführungsform eines Mehrkomponenten-Ketterigliedes, insbesondere eines Zweikomponenten-Kettengliedes, enthält der eine Kunststoffwerkstoff eine reibungsvermindernde Komponente, vorzugsweise PTFE (Polytetrafluorethylen), insbesondere PTFE in einer Menge von grösser 0 % und kleiner 20 % (Volumenprozent). Dabei ist entweder der Kupplungskörper, d.h.

Gelenkkopf, oder die Aufnahme, d.h. die Gelenkpfanne, aus diesem Kunststoffwerkstoff gefertigt. Der Kunststoffwerkstoff des Gegenelementes weist hingegen vorzugsweise keine reibungsvermindernde Zusätze auf. Der Grundwerkstoff des Kettengliedes kann z. B. POM (Polyoxymethylen) sein.

Gemäss einer zweiten Lösung der oben genannten Aufgabe sind die einzelnen Kettenglieder der Förderkette zwar bezüglich der Formgebung nicht jedoch bezüglich des Werkstoffes baugleich ausgebildet. So kann die Förderkette bezüglich des Werkstoffs der Kettenglieder aus einer Mehrzahl von unterschiedlichen Ausführungsarten von Kettengliedern gefertigt sein. Kettenglieder unterschiedlicher Ausführungsarten sind bevorzugt abwechselnd in der Förderkette angeordnet. Die einzelnen Kettenglieder bestehen hier jedoch bevorzugt aus einem einzigen Werkstoff.

Gemäss einer besonders bevorzugten Ausführungsform umfasst die Förderkette zwei Ausführungsarten von Kettengliedern, welche bezüglich Werkstoff nicht baugleich sind. In der Förderkette sind Kettenglieder dieser zwei Ausführungsarten jeweils abwechselnd angeordnet. Die Werkstoffe der nicht baugleichen Ausführungen von Kettengliedern sind bevorzugt so gewählt, dass der Gelenkkopf und die Gelenkpfanne einer Gelenkverbindung jeweils eine geringe Reibung aufweisen. Das heisst, auf die vorgenannte Weise kann einerseits der Reibungskoeffizient zwischen den beiden Bauteilen gesenkt werden und andererseits kann hierdurch der Verschleiss an den Berührungsflächen minimiert werden.

So kann z. B. der Werkstoff der ersten Ausführungsart eines Kettengliedes ein Kunststoff mit einer reibungsvermindernden Komponente, vorzugsweise PTFE, insbesondere PTFE in einer Menge von grösser 0 % und kleiner 20 % (Volumenprozent) sein. Der Werkstoff der zweiten Ausführung eines Kettengliedes ist ein Kunststoff ohne PTFE. Der (Grund-) Werkstoff der ersten und zweiten Ausführungsart kann z. B. POM sein bzw. diesen enthalten.

Besteht eine Förderkette aus mehreren Ausführungsarten von Kettengliedern, so weisen die Kettenglieder einer Ausführungsart jeweils eine spezifische Farbgebung auf, welche sich von der Farbgebung der Kettenglieder anderer Ausführungsarten unterscheidet. Auf diese Weise können die Kettenglieder verschiedener Ausführungsarten optisch einfach voneinander unterschieden werden.

Die Kettenglieder, unabhängig davon, ob diese Ein- oder Mehrkomponenten-Kettenglieder sind lassen sich bevorzugt mittels eines Spritzgiessverfahrens in einem oder mehreren Spritzgiessschritten herstellen.

In einer Weiterbildung der Erfindung enthält der Mittelabschnitt des Kettengliedes erste Verbindungsmittel zum kraft- und/oder formschlüssigen Verbinden der Kettenglieder mit einem Förderorgan bzw. mit dessen Förderelementen. Die Förderkette bildet mit dem Förderorgan ein Fördermittel aus. Die ersten Verbindungsmittel sind vorzugsweise auf einer Verbindungsseite des Kettengliedes, welche zum geförderten Gut hingerichtet ist, vorgesehen. Die ersten Verbindungsmittel können Stecköffnungen oder Rasthaken umfassen, wobei das Förderorgan das entsprechend komplementäre, zweite Verbindungsmittel aufweist. Die Verbindung zwischen dem Förderelement und den Kettengliedern geschieht z. B. über eine Steckverbindung, in welcher Rasthaken in Stecköffnungen einhaken und darin einrasten. Die Rasthaken sind z. B. federelastisch ausgebildet und werden beim Einstecken unter Kraftaufwand seitlich voneinander weg oder zueinander hingebogen, so dass sich diese beim Einrasten in die Steckaufnahme klemmend verkeilen. Die Rasthaken können laschenartig ausgestaltet sein. Zum Lösen der Verbindung müssen die Rasthaken unter Kraftaufwand wieder seitlich weggebogen werden, damit sich die Rastnasen aus der Rastposition lösen können. Erst dann kann das Förderelement vom Kettenglied gelöst werden. Damit das Lösen bzw. Entfernen des Förderelementes vom Kettenglied auch von der Förderfläche her und daher auch im betriebsbereiten Zustand der Fördereinrichtung möglich ist, können im Förderelement Durchgangsöffnungen, z. B. zwei Werkzeugöffnungen im Bereich der Rasthaken, vorgesehen sein. Durch die Werkzeugöffnungen kann nun ein Werkzeug, z. B. ein zangenförmiges Werkzeug mit Klemm- oder Spreizschenkeln eingeführt werden, mittels welchem die Rasthaken seitlich weggebogen und so die Verhakung gelöst werden kann. In diesem Fall sind die Rasthaken bevorzugt am Förderelement angebracht.

Das Förderorgan kann aus plattenförmigen Elementen bestehen, welche auf den Kettengliedern in der beschriebenen Weise befestigbar sind. Das Förderorgan kann jedoch auch an den Kettengliedern entsprechend befestigte Greifer umfassen.

Das Kettenglied kann in Weiterbildung der Erfindung eine Antriebsschnittstelle zur asymmetrischen oder symmetrischen Einleitung einer Antriebskraft aufweisen. Die Antriebsschnittstelle ist im Speziellen eine Zahnung am Kettenglied zwecks Ausbildung eines Eingriffs mit der Zahnung eines Antriebmittels. Eine Antriebsschnittstelle zur asymmetrischen Einleitung einer Antriebskraft bedeutet, dass die Antriebskraft nur von einer Seite auf das Kettenglied eingeleitet wird. Entsprechend weist das Kettenglied nur auf einer Seite, z. B. auf der der Verbindungsseite mit dem Förderorgan gegenüber liegenden Gegenseite, entsprechende Schnittstellenmittel, wie z. B. eine Zahnung, auf. Eine Antriebsschnittstelle zur symmetrischen Einleitung einer Antriebskraft bedeutet, dass die Antriebskraft von zwei gegenüber liegenden Seiten auf das Kettenglied eingeleitet wird. Entsprechend weist das Kettenglied auf zwei gegenüber liegenden Seiten, z. B. jeweils seitlich und unterhalb von der Verbindungsseite zum Förderorgan bzw. zu Laufrollen am Fördermittel hin Schnittstellenmittel, wie z. B. eine Zahnung, auf. Die symmetrische Krafteinleitung weist den Vorteil auf, dass bei dieser keine Gegenkraft auf das Kettenglied ausgeübt werden muss, wie dies bei einer asymmetrischen Krafteinleitung zwecks Verhinderung einer Ausweichbewegung der Förderkette der Fall ist.

Die Zahnung ist vorzugsweise in einer Ebene ausgebildet. Sie erstreckt sich jeweils vorzugsweise über einen Flächenabschnitt. Die Zahnung kann zackenförmig ausgebildet sein und quer zur Förder- bzw. Längsrichtung verlaufende Zähne, Sprossen oder Rippen aufweisen. Die Zahnung dient der formschlüssigen Verbindungen mit einem Antriebsmittel zur Kraft- und Bewegungsübertragung. Die Antriebsmittel und die Antriebsschnittstelle können sowohl zum Beschleunigen als auch zum Abbremsen der Fördermitteln ausgelegt sein. Die Merkmale der Antriebsschnittstelle sollen hier als unabhängige Merkmale verstanden werden.

An einzelnen oder sämtlichen Kettengliedern kann jeweils wenigstens eine Laufrolle angebracht sein. Die wenigstens eine Laufrolle kann bereits bei der einteiligen Herstellung des Kettengliedes angebracht werden, oder nachträglich über entsprechende Anbindungsschnittstellen, wie Achskörper, an das, vorzugsweise einteilig gefertigte, Kettenglied angebracht werden. Die Laufrolle bzw. Laufrollen an den Kettengliedern dienen zum Abstützen des Fördermittels an einer Längsführungseinrichtung und zum geführten Bewegen des Fördermittels entlang einer durch eine Längsführungseinrichtung vorgegebene Förderbahn. Bevorzugt ist jeweils beidseits eines Kettengliedes je eine Laufrolle angebracht, bzw. eine Anschlussschnittstelle dazu vorgesehen. D.h., pro Kettenglied sind zwei Laufrollen, z. B. symmetrisch zueinander, angeordnet.

In einer bevorzugten Weiterbildung der Erfindung ist beidseits vom Kettenglied je eine Laufrolle angeordnet und an diesem befestigt. Die Laufrollen bilden jeweils eine Auflagestelle zu einer Führungsschiene einer Längsführungseinrichtung aus. Die Auflagestellen können Auflagepunkte bzw. Auflagelinien oder Aüflageflächen sein. Die Auflagestellen der beiden Laufrollen liegen zusammen mit der Gelenkverbindung auf einer gemeinsamen Geraden. Die Auflagestellen der beiden Laufrollen liegen insbesondere zusammen mit dem geometrischen Mittelpunkt der Gelenkverbindung auf einer Geraden bzw. liegen mit der erste Schwenkachse A1 der Gelenkverbindung auf einer gemeinsamen Geraden. Der geometrische Mittelpunkt der Gelenkverbindung wird z. B. durch den Schnittpunkt der ersten und zweiten Schwenkachse A1 und A2 ausgebildet.

Die Kettenglieder können in Leichtbauweise, insbesondere in einer Art Hohlbauweise mit sich kreuzenden Kammerwänden, welche offene und/oder geschlossene Kammern einschliessen, ausgebildet sein. Die Kettenglieder können insbesondere in einer Art Fachwerkbauweise hergestellt sein.

Die Gelenkverbindung zwischen den einzelnen Kettengliedern ist übrigens bevorzugt so ausgestaltet, dass die Kettenglieder über Kontaktflächen Stossimpulse bzw. Druckkräfte an benachbarte Kettenglieder weiterleiten bzw. übertragen können. Bevorzugt sind die Kettenglieder bzw. die Gelenkverbindungen so ausgebildet, dass diese sowohl Zugkräfte als auch Stossimpulse bzw. Druckkräfte gegenseitig übertragen können. Dadurch kann die Förderkette sowohl über Zug- als auch über Druckkräfte angetrieben werden. Das heisst, die Förderkette kann sowohl gezogen als auch gestossen werden. Dank der erfindungsgemässen Gelenkverbindung ist die Förderkette sowohl bezüglich Druck- als auch Zugkräfte gesichert.

Die Erfindung betrifft ferner auch ein Kettenglied für eine Förderkette. Das Kettenglied zeichnet sich dadurch aus, dass dieses jeweils an einem ersten Endabschnitt eine Aufnahme und an einem zweiten Endabschnitt einen Kupplungskörper aufweist, wobei der Kupplungskörper so gestaltet ist, dass dieser in die Aufnahme eines benachbarten, bezüglich Formgebung baugleichen Kettengliedes einführbar ist. Ferner ist die Aufnahme so gestaltet, dass in diese der Kupplungskörper eines benachbarten, bezüglich Formgebung baugleichen Kettengliedes einführbar ist. Im Weiteren ist das Kettenglied so gestaltet, dass die Aufnahme mit dem Kupplungskörper des in Längsrichtung der Förderkette benachbarten Kettengliedes und der Kupplungskörper mit der Aufnahme des anderen, in Längsrichtung der Förderkette benachbarten Kettengliedes mittels einer Steck-Dreh-Bewegung eine Gelenkverbindung eingehen kann.

Die in dieser Beschreibung im Zusammenhang mit der Förderkette beschriebenen, strukturellen und funktionellen Merkmale in Bezug auf die Kettenglieder, treffen selbstverständlich auch auf das unabhängig beanspruchte einzelne Kettenglied zu, weswegen diese Merkmale an dieser Stelle nicht mehr separat beschrieben werden.

Die vorliegende Erfindung zeichnet sich durch eine wirtschaftliche Herstellung der einzelnen Bauteile aus. Ein einteiliges, Ein- oder Mehrkomponenten-Kettenglied oder Förderelement lässt sich z. B. in wenigen Verfahrensschritten und mit geringerem fertigungstechnischen und logistischen Aufwand herstellen. Die baugleichen Kettenglieder wie auch die bevorzugt ebenfalls baugleichen Förderelemente lassen sich, mit oder ohne Einlegeteile, in einem Arbeitsschritt mittels eines ein- oder mehrstufigen Spritzgiessverfahrens herstellen. Ferner können in diesem Fertigungsschritt auch Achskörper, Arme, Wälzkörperkäfige und/oder ganze Laufrollen integral mit dem Kettenglied bzw. Förderelement hergestellt werden. Ferner können auch die kompletten Rollenkörper als Einlegeteil mit dem Kettenglied bzw. dem Förderelement bei dessen Herstellung integral verbunden werden.

Eine weitere Ausbildung betrifft eine Längsführungseinrichtung, insbesondere für eine Fördereinrichtung. Die nachfolgend beschriebene Längsführungseinrichtung kann aber auch in Kombination mit der oben beschriebenen Förderkette bzw. mit dem oben beschriebenen Fördermittel in ihren unterschiedlichen Ausgestaltungen besondere Ausführungsformen von Fördereinrichtungen ausbilden.

Die besagte Längsführungseinrichtung enthält wenigstens eine Führungsschiene sowie eine Haltevorrichtung, an welcher die wenigstens eine Führungsschiene über Befestigungsmittel gehaltert ist. Die Befestigungsmittel können zur lösbaren oder nicht-lösbaren Befestigung der Führungsschiene an der Haltevorrichtung ausgelegt sein. Die Befestigung kann stoffschlüssig (z. B. Schweissverbindung) oder kraft- und/oder formschlüssig sein.

Die Führungsschienen bzw. deren nachfolgend beschriebenen Profilkörper sind jedoch von der Längsführungseinrichtung bevorzugt wiederholt lösbar und wiederholt daran fixierbar. In diesem Fall sind die Befestigungsmittel bevorzugt für kraft- und/oder formschlüssiges Fixieren der Profilkörper an der Haltevorrichtung ausgelegt. Die Befestigungsmittel können z. B. Halteelemente in Form von Halteklammern, Haltelaschen, Haltestreifen, Halteriegel, Halteschieber oder Halteschrauben sein. Die Halteelemente können z. B. an die Haltevorrichtung bzw. an die Querverbindungselemente an entsprechender Stelle angeschweisst oder anderweitig angebracht sein.

Die Längsführungseinrichtung zeichnet sich nun dadurch aus, dass die wenigstens eine Führungsschiene aus wenigstens einem Profilkörper ausgebildet ist, welcher eine längslaufende, querschnittlich konkave Vertiefung aufweist, die als Führungsfläche für ein Fördermittel ausgebildet ist. Die konkave Vertiefung zeichnet sich insbesondere durch einen vollständig oder teilweise bogenförmigen Querschnittsverlauf aus. Die besagte Vertiefung bildet dabei eine Führungsrinne für die Fördermittel bzw. deren Laufrollen aus.

Die Führungsfläche ist insbesondere zur Führung von Laufrollen eines Fördermittel ausgestaltet. Die Laufrollen können dabei flächig oder linienförmig der Führungsfläche, welche in diesem Fall einer Lauffläche entspricht, aufliegen. Die Art der Auflage der Führungsrollen auf der Lauffläche (flächig oder linienförmig) hängt von der Querschnittsgeometrie der Laufrollen und der längslaufenden, konkaven Vertiefung ab.

Die Laufrollen können z. B. eine Lauffläche aus Kunststoff aufweisen. Die Rollfläche der Laufräder kann eine konkave Querschnittsgeometrie aufweisen.

Die Längsführungseinrichtung bzw. deren Führungsschiene sind als Auflage für die Fördermittel bzw. für deren Laufrollen ausgebildet, wobei die Auflagekraft durch die auf die Fördermittel wirkende Schwerkraft und/oder Fliehkräfte erzeugt wird.

Gemäss einer ersten Ausführungsform besteht der Profilkörper aus einem Strangpress- oder Stranggussprofil, wobei die wenigstens eine längslaufende, querschnittlich konkave Vertiefung beim Strangpress- bzw. Stranggiessverfahren in den Profilquerschnitt des Profilkörpers eingebracht wird.

Gemäss einer zweiten Ausführungsform ist der Profilkörper ein Umformprofil, welches aus einem in seinem Querschnitt plastisch umgeformten, rohrförmigen Ausgangsprofil hergestellt ist. Die plastische Umformung geschieht z. B. über ein mechanisches Umformverfahren. Das rohrförmige Ausgangsprofil ist z. B. dünnwandig ausgebildet.

Die Lösung gemäss der zweiten Ausführungsform erlaubt die Verwendung von konventionellen, auf dem Markt erhältlichen Rohrprofilen, wie Rundrohre oder Rechteckrohre, zu entsprechend günstigen Konditionen. Das Ausgangsprofil braucht nicht separat angefertigt zu werden und es kann auf die Beschaffung teurer Werkzeuge und Anlagen zur Herstellung des Ausgangsprofils verzichtet werden. Dadurch können die aus Rundrohren geformten Profilkörper und mit diesen die Führungsschienen äusserst kostengünstig produziert werden.

Dank der kostengünstigen und einfachen Herstellung der Führungsschienen können diese als Verbrauchskomponenten ausgelegt werden, welche bei Verschleissbedingter Abnützung problemlos und kostengünstig ausgewechselt werden können. Es kann vorgesehen sein, dass zur Verminderung des Verschleisses der Laufrollen bei der Paarung Führungsschiene / Laufrollen, die Führungsschiene so ausgelegt sind, dass diese, z. B. durch geringere Härte, einen grösseren Verschleiss als die Laufrollen aufweisen, um so die Laufrollen zu schonen.

Gemäss einer Weiterbildung des Profilkörpers beider Ausführungsformen enthält der Profilkörper wenigstens zwei, an dessen Aussenumfang angeordnete, längslaufende, konkave Vertiefungen, welche jeweils als Führungsflächen ausgebildet sind. Der Profilkörper kann insbesondere zwei, drei oder vier längslaufende, konkave Vertiefungen gleicher oder unterschiedlicher Querschnittsgeometrie ausbilden, welche als Führungsfläche für Fördermittel ausgelegt sind.

Die wenigstens zwei längslaufenden, konkaven Vertiefungen verlaufen vorzugsweise parallel zueinander. Die wenigstens zwei längslaufenden Vertiefungen sind jeweils bevorzugt als Führungsflächen ausgebildet, so dass in Abhängigkeit von der Montage des Profilkörpers an der Haltevorrichtung eine der längslaufenden Vertiefungen die Funktion als Führungsfläche in der Längsführungseinrichtung wahrnimmt.

Es kann nun vorgesehen sein, dass die wenigstens zwei längslaufenden Vertiefungen dieselbe Querschnittsgeometrie aufweisen und so wahlweise in der Fördereinrichtung als Führungsflächen eingesetzt werden können. Wie weiter unten näher erläutert, erlaubt dies den Wechsel auf eine andere Führungsfläche, wenn eine der Führungsflächen, z. B. aufgrund von Verschleiss, nicht mehr zum Führen der Fördermittel benutzt werden kann.

Es kann jedoch auch vorgesehen sein, dass die wenigstens zwei längslaufenden Vertiefungen unterschiedlich ausgebildet sind, d.h. unterschiedliche Querschnittsgeometrien aufweisen. Dies erlaubt den Einsatz des Profilkörpers in Längsführungseinrichtung mit Führungsschienen mit unterschiedlich dimensionierten Führungsflächen. Je nach den in der Fördereinrichtung eingesetzten Fördermitteln bzw. Laufrollen, sind nämlich verschieden ausgestaltete Führungsflächen für die Laufrollen notwendig.

Die wenigstens zwei längslaufenden konkaven Vertiefungen sind bevorzugt so angeordnet, dass der Profilkörper eine punktsymmetrische Querschnittsform aufweist.

Enthält nun ein Profilkörper bzw. eine aus den Profilkörpern gebildete Führungsschiene mehrere längslaufende, konkave Vertiefungen, welche als Führungsflächen ausgebildet sind, so werden die Profilkörper derart in den Haltevorrichtung befestigt, dass eine der längslaufenden, konkaven Vertiefungen in der richtigen Lage zur Wahrnehmung ihrer Funktion als Führungsfläche liegt. Weist die Lauffläche eines Profilkörpers einer Führungsschiene einen Verschleiss oberhalb eines festgelegten Toleranzwertes auf, kann eine andere längslaufende, konkave Vertiefung desselben Profilkörpers als Lauffläche benutzt werden. Beispielsweise kann durch Drehen des Profilkörpers um seine Längsachse rasch und einfach eine am Aussenumfang desselbigen liegende längslaufende Vertiefung als Lauffläche dienen. Durch die Benutzung von verschiedenen längslaufenden, konkaven Vertiefungen der Profilkörper als Lauffläche lässt sich eine Lebensdauer der Führungsschiene bzw. deren Profilkörper vervielfachen.

In einer Weiterbildung des Profilkörpers gemäss der zweiten Ausführungsform ist die wenigstens eine, längslaufende, querschnittlich konkave Vertiefung im Umformprofil in einem plastischen Umformverfahren in das Ausgangsprofil eingebracht.

Gemäss einer Weiterbildung des Profilkörpers beider Ausführungsformen weist der Profilkörper unter Ausbildung einer X-förmigen Querschnittsform vier gleichmässig, an dessen Aussenumfang angeordnete bzw. eingebrachte längslaufende, querschnittlich konkave Vertiefungen auf. Ist der Profilkörper ein Umformprofil gemäss der zweiten Ausführungsform, so werden die vier längslaufenden Vertiefungen über ein plastisches Umformverfahren in ein rohrförmiges Ausgangsprofil eingeformt.

Gemäss einer Weiterbildung des Profilkörpers beider Ausführungsformen bildet der Profilkörper wenigstens in seinen Endabschnitten eine stimseitig offene und vorzugsweise eine in Profillängsrichtung durchgehende Hohlkammer aus. In einer besonderen Weiterbildung ist der Profilkörper ein, insbesondere geschlossenes, Hohlprofil. Geschlossene Hohlprofile zeichnen sich durch eine hohe Torsionsteifigkeit bei gleichzeitig geringem Gewicht aus. Ist der Profilkörper ein Hohlprofil, so bilden die konkaven Vertiefungen im Profilinnenraum bevorzugt eine querschnittlich konvexe Kammerwand aus, welche, wie nachfolgend beschrieben, z. B. als Zentrierfläche zur Ausbildung einer Flächen- oder Linienberührung mit einem Zentriermittel dient.

Gemäss einer Weiterbildung des Profilkörpers gemäss der zweiten Ausführungsform ist das Umformprofil mit seiner wenigstens einen längslaufenden Vertiefung am Aussenumfang aus einem Rundrohr mit kreisquerschnittlichem oder ovalem Querschnitt geformt. Das Ausgangsprofil kann auch eine polygonale Querschnittsform haben und z. B. einen quadratischen oder rechteckförmigen Querschnitt aufweisen.

Der Profilkörper gemäss den beiden Ausführungsformen kann aus Metall, wie Stahl (Edelstahl) oder Aluminium, oder aus Kunststoff bestehen.

Das Ausgangsprofil zur Herstellung des Umformprofils gemäss der zweiten Ausführungsform aus kann ebenfall ein Strangpress- oder Stranggussprofil sein. Ausgangsprofile in Form von Rohrprofilen, insbesondere von Rundrohren, können jedoch z. B. auch aus einem Walzprodukt (z. B. Metallblech) mittels eines Umform- bzw. Biege- und anschliessendem Schweissverfahren hergestellt sein.

Gemäss einer Weiterbildung des Profilkörpers beider Ausführungsformen weist der Profilkörper wenigstens zwei, einander benachbarte, und an dessen Aussenumfang angeordnete längslaufende, konkave Vertiefungen auf, wobei die konkaven Vertiefungen einen längslaufenden in etwa radial nach aussen gerichteten Einschubstreifen, auch Einschubleisten genannt, zum Einschub in eine schlitzförmige Ausnehmung einer Haltevorrichtung einschliessen bzw. ausbilden. Ist der Profilkörper ein Umformprofil aus einem Hohlprofil, so kann der Einschubstreifen durch Aneinanderführen zweier Profilwände doppelwandig ausgebildet sein.

Enthält der Profilkörper mehrere, als Führungsflächen ausgebildete, längslaufende Vertiefungen, so ist vorzugsweise auch eine entsprechende Anzahl Einschubstreifen vorgesehen, welche so ausgebildet und im Profilkörper angeordnet sind, dass je nachdem, welcher Einschubstreifen in die schlitzförmige Ausnehmung der Haltevorrichtung eingeschoben wird, die eine oder andere längslaufende Vertiefung die Position als Führungsfläche in der Längsführungseinrichtung einnimmt.

Weist der Profilkörper, wie oben beschrieben unter Ausbildung einer X-förmigen Querschnittsform vier längslaufende konkave Vertiefungen auf, so wird die X-Form durch die am Aussenumfang in etwa radial nach aussen gerichteten Einschubstreifen zwischen den längslaufenden konkaven Vertiefungen ausgebildet.

Gemäss einer Weiterbildung der Längsführungseinrichtung ist die wenigstens eine Führungsschiene aus einer Mehrzahl von in Längsrichtung hintereinander, Stoss-an-Stoss angeordneten Profilkörpern ausgebildet. Die Profilkörper können für gerade Förderstreckenabschnitte gerade und für gekrümmte Förderstreckenabschnitte gekrümmt ausgebildet sein. Die Krümmung wird z. B. über ein Biegeverfahren erzielt. Es weisen hierbei insbesondere die geraden Profilkörper zwei oder mehr längslaufende, konkave Vertiefungen auf. Da die besagten Vertiefungen gegebenenfalls die Biegesteifigkeit erhöhen, sind solche Profilkörper nicht immer zur Herstellung gebogener Profilkörper besonders gut geeignet. Daher weisen gebogene Profilkörper vorzugsweise jeweils nur eine solche längslaufende Vertiefung auf.

Zur gegenseitigen Zentrierung der Profilkörper können jeweils zwei, einen Stoss ausbildende Profilkörper über ein in die stirnseitig offenen Hohlkammern der Profilkörper profilübergreifend eingeführtes und radial in den Hohlkammern fixiertes Zentriermittel versatzfrei zueinander ausgerichtet werden. D.h., die Übergänge zwischen zwei Profilkörpern sind glatt und bilden keine Absätze bzw. Rillen aus.

Das Zentriermittel kann z. B. ein Zentrierstift oder Zentrierrohr sein. Die Hohlkammern können z. B. Zentrierflächen ausbilden, welchen das Zentriermittel anliegt, und über welche dieses radial fixiert ist. Die Zentrierflächen sind z. B. Kammerwände bzw. Profilwände. Das Zentriermittel kann den Zentrierflächen unter Ausbildung einer Flächenberührung flächig oder unter Ausbildung einer Linienberührung linienförmig anliegen. Die Profilkörper sind also über die Zentriermittel in Längsrichtung zusammengesteckt und werden so durch die Zentriermittel automatisch zentriert.

Die Halterungsvorrichtung der Längsführungseinrichtung weist gemäss einer besonderen Weiterbildung schlitzförmige Aufnahmen auf, über welche die Profilkörper der Führungsschienen gehaltert werden. In die schlitzförmige Aufnahme wird insbesondere ein Einschubstreifen des Profilkörpers z. B. formschlüssig eingeschoben.

Gemäss einer Weiterbildung der Längsführungseinrichtung weist diese zwei voneinander beabstandete und parallel geführte Führungsschienen auf, welche über die Haltevorrichtung gehaltert, und vorzugsweise miteinander verbunden sind.

Enthält die Längsführungseinrichtung zwei, nebeneinander geführte Führungsschienen, so umfasst die Halterungsvorrichtung wenigstens ein Querverbindungselement mit schlitzförmigen Aufnahmen, über welche die Profilkörper der zwei Führungsschienen gehaltert werden. Das Querverbindungselement verbindet folglich die Führungsschienen miteinander.

Die Längsführungseinrichtung betrifft ferner auch Verfahren zur Herstellung eines Profilkörpers einer Führungsschiene von einer oben beschriebenen Längsführungseinrichtung. Das Verfahren umfasst folgende Schritte:
- Bereitstellen eines vorgefertigten Hohlprofils, insbesondere eines Rohrprofils;
- Einbringen einer längslaufenden, querschnittlich konkaven Vertiefung in den Aussenumfang des Hohlprofils durch plastisches Umformen.

In einer Weiterbildung des Verfahrens enthält dieses folgende Schritte:
- Einbringen von zwei benachbarten, längslaufenden, querschnittlich konkaven Vertiefungen in den Aussenumfang des Hohlprofils und Ausbilden eines längslaufenden Einschubstreifens zwischen den Vertiefungen durch plastisches Umformen.

Selbstverständlich sind Verfahrensmerkmale mit Vorrichtungsmerkmalen kombinierbar und umgekehrt. Die besagte Längsführungseinrichtung findet insbesondere in einer Fördereinrichtung Verwendung.

Die beschriebenen Fördermittel und Längsführungseinrichtung erlauben eine dreidimensionale Auslegung des Förderweges. So können z. B. spiralförmige Förderwege mit gleichzeitig Links- oder Rechtskurven und positiven oder negativen Steigungen vorgesehen werden. Die Fördereinrichtung mit Fördermittel und Längsführungseinrichtung ist leicht und trotzdem stabil sowie verschleissarin.

Da das Fördermittel und insbesondere die Förderkette relativ leicht und zudem reibungsarm im Betrieb ist, ist auch weniger Antriebsleistung erforderlich. Die Antriebe können daher entsprechend kleiner dimensioniert werden. Mehrere vergleichsweise kleine Antriebe können so über die Fördereinrichtung verteilt angeordnet sein und das Fördermittel lokal antreiben.

Die Fördereinrichtung mit erfindungsgemässer Förderkette ist auch in der Lebensmittelverarbeitung einsetzbar, da diese einfach zu reinigen ist. Dank der erfindungsgemässen Konstruktion kann das Reinigungsmittel z. B. ungehindert ablaufen. Ferner erlaubt die erfindungsgemässe Fördereinrichtung eine einfache und schnelle Montage. Bestehende Fördereinrichtungen lassen sich einfach und kostengünstig mit der erfindungsgemässen Fördereinrichtung nachrüsten oder sich durch diese ersetzen.

### WEGE ZUR AUSFÜHRUNG DER ERFINDUNG

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine perspektivische Ansicht einer ersten Ausführungsform eines Fördermittels mit einer erfindungsgemässen Förderkette;
- Figur 2: eine Explosionsansicht des Fördermittels der Fördereinrichtung nach Figur 1;
- Figur 3: eine perspektivische Ansicht einer Fördereinrichtung mit einem Fördermittel nach Figur 1 und 2;
- Figur 4a..b: eine perspektivische Ansicht eines weiteren Fördermittels mit einer erfindungsgemässen Förderkette;
- Figur 5a..b: eine perspektivische Ansicht einer weiteren Ausführungsform eines erfindungsgemässen Kettengliedes mit Laufrollen;
- Figur 6a..b: eine perspektivische Ansicht einer weiteren Ausführungsform einer Fördereinrichtung mit einem Fördermittel; und
- Figur 6c: eine perspektivische Ansicht einer weiteren Ausführungsform einer Längsführungseinrichtung.

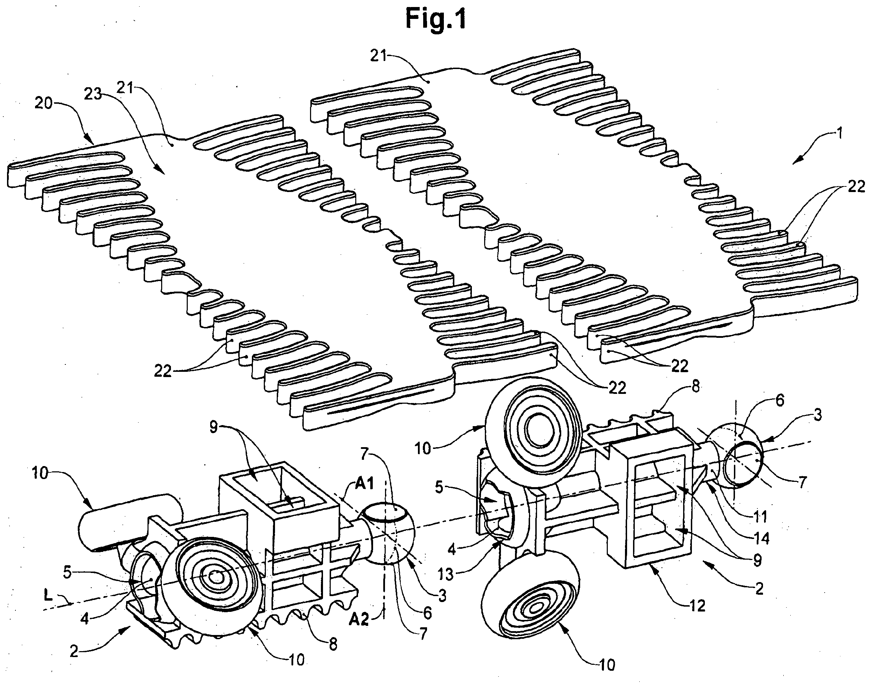

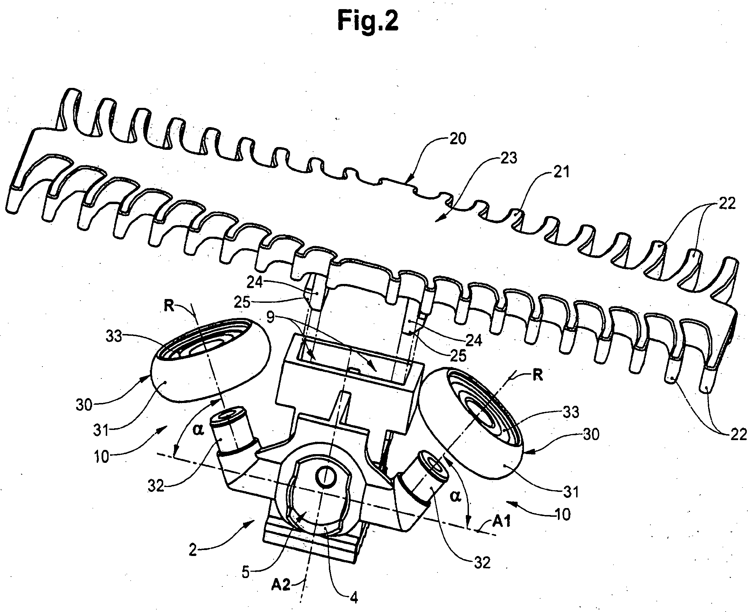

Die Figuren 1, 2 und 3 zeigen ein Fördermittel 1 mit Kettengliedern 2, welche über eine Steck-Drehverbindung zu einer Förderkette zusammengeführt werden können. Ferner umfasst das Fördermittel ein Förderorgan 20 mit Förderelementen 21 in Form von baugleichen, plattenförmigen Tragelementen, welche hintereinander zu einem Förderorgan 20 angeordnet sind. Die plattenförmigen Tragelemente 21 bilden eine Förderfläche 23 aus, auf welcher das Fördergut gefördert wird (nicht gezeigt). Auf ihrer, der Förderfläche 23 gegenüber liegenden Unterseite sind zweite Verbindungsmittel in Form von abstehenden Rasthaken 24 angebracht, über welche die Tragelemente 21 über erste Verbindungsmittel 9 an die Kettenglieder 2 befestigt werden können. An ihren, dem vorangehenden und nachfolgenden Tragelement 21 zugewandten Seiten weisen die Tragelemente 21 jeweils eine Mehrzahl, von voneinander beabstandeten, und leicht gebogenen, zinkenartige Anformungen 22 auf. Diese Anformungen 22 sind für einen, insbesondere in Kurvenregionen, kämmenden Eingriff in ebenfalls leicht gebogene, zinkenartige Anformungen 22 des benachbarten, gleichartig ausgebildeten Tragelementes 21 gedacht.

Das Kettenglied 2 weist einen ersten Endabschnitt 13, einen zweiten Endabschnitt 14 und einen Mittelabschnitt 12 auf. Der zweite Endabschnitt 14 enthält einen Kupplungskörper in Form eines Gelenkkopfes 3, welcher über einen Halsabschnitt 11 mit dem Grundkörper des Kettengliedes 2 verbunden ist. Der Gelenkkopf 3 weist eine kugelförmige Grundform auf. Diese Grundform wird von zwei gegenüber liegenden, abgeflachten Seiten 7 am Gelenkkopf überlagert. Der erste Endabschnitt 13 enthält eine sphärische Aufnahme in Form einer Gelenkpfanne 5. Die Gelenkpfanne 5 bildet einen kugelschalenförmigen Ausschnitt aus. Ferner weist die sphärische Aufnahme eine in Längsrichtung L zum benachbarten Kettenglied 2 weisende Einführöffnung 4 auf, durch welche der Gelenkkopf 3 einführbar ist.

Der Gelenkkopf 3 eines Kettengliedes 2 als Teil einer Förderkette greift nun jeweils in die Gelenkpfanne 5 des benachbarten Kettengliedes 2 ein, wobei die Gelenkpfanne 5 den Gelenkkopf 3 über dessen Äquator 6 hinaus umgreift, so dass der Gelenkkopf 3 in Betriebsposition nicht in Längsrichtung entgegen der Einführrichtung aus der Gelenkpfanne 5 hinaus gleiten kann.

Zur Einführung des Gelenkkopfes 3 in die Gelenkpfanne 5, weist diese eine schlitzartige Einführöffnung 4 auf. Die Einführöffnung 4 entspricht dem (grössten) Querschnitt des zweiseitig abgeflachten Gelenkkopfes 3 oder ist etwas grösser. Die schlitzartige Einführöffnung 4 sowie der seitlich abgeflachte Gelenkkopf 3 sind nun so relativ zueinander ausgebildet und aufeinander ausgerichtet, dass der Gelenkkopf 3 nur dann in die Gelenkpfanne 5 eingeführt werden kann, wenn die beiden dazugehörigen Kettenglieder 2 in einem Winkel von rund 90° relativ zueinander verdreht sind. In dieser Einführposition sind Gelenkkopf 3 und Einführöffnung 4 gleichgerichtet. Während des Betriebes der Förderkette sind der Gelenkkopf 3 und die Einführöffnung 4 hingegen nie gleichgerichtet sondern stehen vielmehr immer in einem Winkel verdreht zueinander. In unverdrehter Position der Kettenglieder 2 relativ zueinander steht die schlitzartige Einführöffnung 4 daher immer senkrecht zu den abgeflachten Seiten des Gelenkkopfes 3. Daher muss eines der Kettenglieder 2 beim Zusammenfügen und Lösen in Längsrichtung L der Förderkette relativ zum Fügepartner 2 immer zuerst um einen Winkel von 90° gedreht werden.

Der Mittelabschnitt 12 der Kettenglieder 2 ist kastenförmig mit zwei seitlichen Hohlkammern 9 ausgebildet, welche als erste Verbindungsmittel in Form von Steckaufnahmen dienen. Zur Herstellung einer Steckverbindung werden die bereits erwähnten, federelastischen Rasthaken 24 in die Hohlkammern 9 eingeführt bis diese austrittsseitig mit ihrer Rastnase 25 an der Kammerwand klemmend einrasten. Zum Lösen der Rastverbindung müssen die Rasthaken 24 mit ihren Rastnasen 25 wieder entsprechend aus der Rastposition gelöst werden.

Die Kettenglieder 2 sind jeweils gleichartig ausgebildet und weisen neben der zuvor beschriebenen Gelenkverbindung zwei Laufrollen 10 auf, welche jeweils seitlich an diesen in symmetrischer Anordnung befestigt sind. Die Laufrolle 10 umfasst jeweils einen drehbar über ein Kugellager 33 auf einem Achskörper 32 gelagerten Rollenkörper 30 mit einer Abrollfläche 31. Der Achskörper 32 ist vorzugsweise integral an das Kettenglied 2 angeformt, wobei der Rollenkörper 30 über das Kugellager 33 auf einen Achsstummel des Achskörpers 32 aufgesteckt ist. Der Achskörper 32 ist eine abgewinkelte Bauteilkomponente, welches seitlich vom Kettenglied 2 nach aussen führt und mit einem anschliessenden Achsstummel schräg nach oben zum Förderorgan 20 hin gerichtet ist. Der Achskörper 32 ist so ausgelegt, dass die Drehachse R der Laufrolle 10 mit der ersten Schwenkachse A1 einen spitzen Winkel α von kleiner 45° und grösser 10°, vorzugsweise von 20° bis 40°, insbesondere von 25° bis 35°, einschliesst. Die beiden Drehachsen R der Rollenkörper-Paarung verlaufen zum Kettenglied 2 hin aufeinander zu und zum Förderorgan 20 hin auseinander.

Die Laufrollen 10 bilden jeweils Auflagepunkte 34 zur Führungsschiene 41 aus. Die Auflagepunkte 34 der beiden Laufrollen 10 liegen zusammen mit der ersten Schwenkachse A1 der Gelenkverbindung auf einer gemeinsamen Geraden V.

Das Kettenglied 2 weist überdies eine, auf der Gegenseite der zum Förderorgan 20 hin gerichteten Verbindungsseite eine ebene und flächenförmige Zahnung 8 auf, welche mit der Zahnung eines Antriebsmittels in Eingriff bringbar ist (nicht gezeigt).

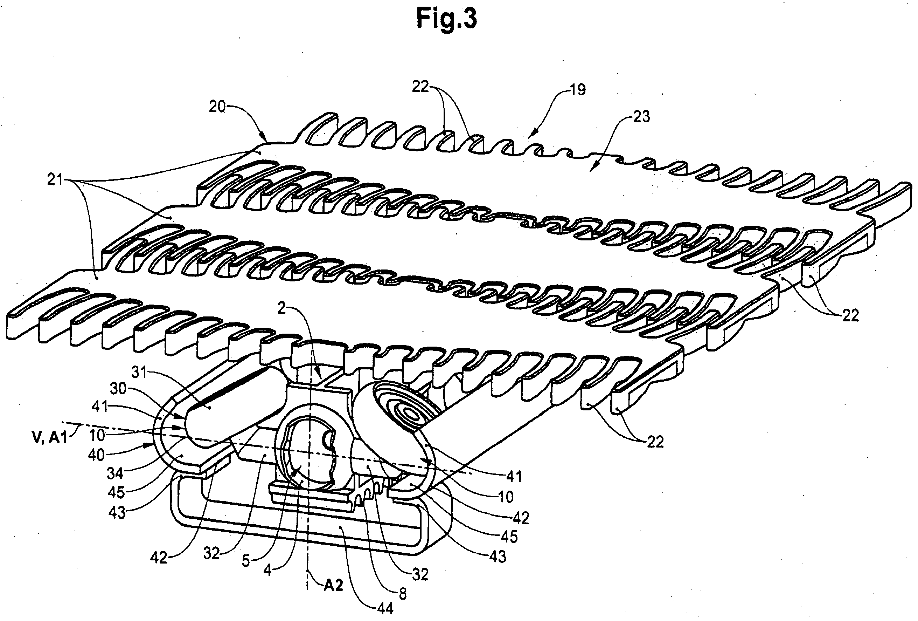

Die Figur 3 zeigt eine Fördereinrichtung 19, die zusätzlich zum Fördermittel 1 eine Längsführungseinrichtung 40, mit zwei parallel und in Abstand zueinander verlaufenden Führungsschienen 41 umfasst, welche über Querverbindungselemente 44 miteinander verbunden sind. Die Querverbindungselemente 44 dienen dem Zusammenhalt der beiden Führungsschienen 41 und als Distanzhalter, insbesondere zur Gewährleistung eines konstanten Abstandes zwischen den beiden Führungsschienen 41. Die Querverbindungselemente 44 sind c-förmig ausgebildet und weisen an beiden Enden einen zur jeweiligen Führungsschiene 41 hin gerichteten Biegeabschnitt 43 auf. Die Endabschnitte der Biegeabschnitte 43 verlaufen parallel zu gegenüberliegenden Endabschnitten der Führungsschienen 41. Auf diese Weise wird eine flächige Verbindungszone 42 ausgebildet, über welche die Querverbindungselemente 44 über eine Stoffschlussverbindung (z. B. Kleben, Schweissen, Löten) mit der Führungsschiene 41 verbunden sind. Die Querverbindungselemente 44 können aus einem gebogenen Walzprodukt bestehen. Die Querverbindungselemente 44 können insbesondere aus geschnittenen, gefrästen oder gestanzten Streifen eines Walzproduktes geformt sein. Die Schienenprofile 41 weisen jeweils im Querschnitt bogenförmige, konkave Laufflächen 45 in Form eines Führungskanals auf, welcher zu den Laufrollen 10 hin, d.h. welche zueinander hin, offen sind. Der Rollenkörper 30 läuft mit seiner Abrollfläche 31 auf der Lauffläche 45. Das Schienenprofil 41 kann ein Pressprofil aus einem Stahl- oder Aluminiumwerkstoff sein. Ferner kann das Schienenprofil 41 auch ein gebogenes oder gerolltes Walzprodukt aus Metall, insbesondere aus einem Stahl- oder Aluminiumwerkstoff, sein. Im Weiteren kann das Schienenprofil 41 auch aus einem Kunststoff bzw. einem verstärkten Kunststoff und/oder aus einem beschichteten Kunststoff sein:

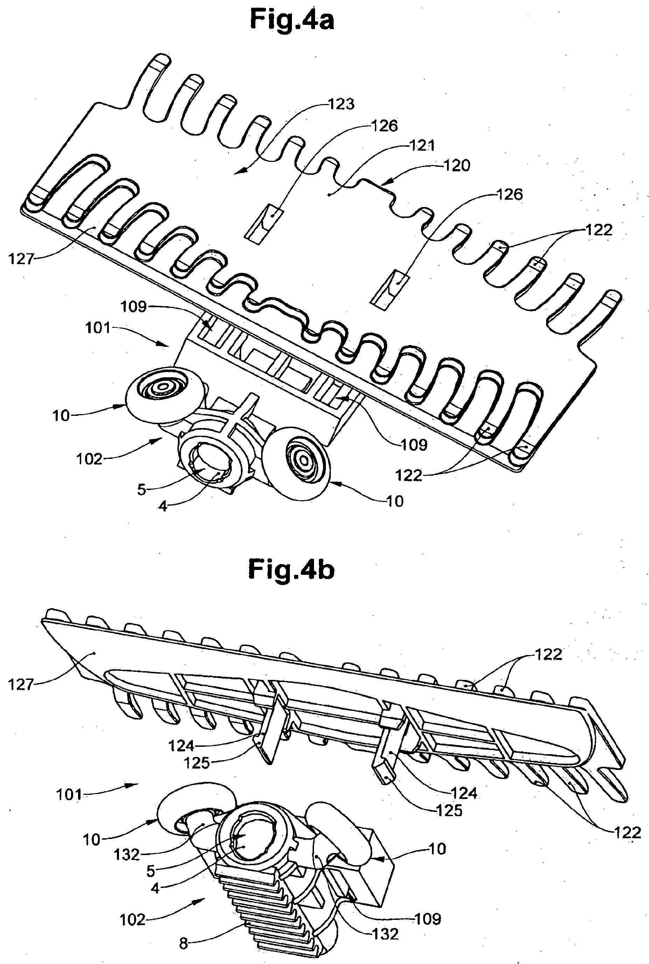

Das Fördermittel 101 nach Figur 4a und 4b enthält ebenfalls eine Förderkette aus einer Mehrzahl von Kettengliedern 102. Die Kettenglieder 102 sind in wesentlichen Merkmalen gleich aufgebaut wie die Kettenglieder 2 gemäss den Figuren 1 bis 3. Auch hier weist das Kettenglied 102 an einem ersten Endabschnitt eine Aufnahme in Form einer Gelenkpfanne 5 sowie einen zweiten Endabschnitte mit einem Gelenkkopf 3 auf. Die Gelenkpfanne 5 weist ferner auch hier eine schlitzartige Einführöffnung 4 auf. Die Steck-Drehverbindung geschieht auf dieselbe Weise wie im Ausführungsbeispiel nach Figur 1 bis 3 und wird daher an dieser Stelle nicht mehr näher beschrieben. Ferner weist das Kettenglied 102 ebenfalls eine Zahnung 8 der bereits beschriebenen Art auf. Die Laufrollen 10 sind über Achskörper 132 in gleicher Art und Weise wie gemäss den Figuren 1 bis 3 am Kettenglied 102 ausgestaltet. Die Steckaufnahmen auf der zum Förderorgan 120 hin gerichteten Verbindungsseite am Mittelabschnitt des Kettengliedes 102 sind im Design leicht modifiziert. Auch hier sind jedoch zwei seitliche Kammern 109 ausgebildet, durch welche Rasthaken 124 geführt und mit ihren Rastnasen 125 austrittseitig mit einer Kammerwand verhaken.

Die plattenförmigen Tragelemente 121 des Förderorgans 120 sind gegenüber dem Ausführungsbeispiel nach Figur 1 bis 3 ebenfalls leicht modifiziert. Die plattenformigen Tragelemente 121 weisen auf beiden, jeweils zu den vor- und nachlaufenden, benachbarten Tragelementen 121 weisenden Seiten jeweils eine Mehrzahl von voneinander beabstandeten, leicht gebogenen, zinkenartigen Anformungen 122 für einen kämmenden Eingriff in ebenfalls leicht gebogene, zinkenartige Anformungen 122 des benachbarten Tragelementes 121 auf. Die zinkenartigen Anformungen 122 sind jedoch jeweils auf einer Seite des Tragelementes 121 durch einen Führungsboden 127 unterstützt, damit die kämmend eingreifenden, nicht durch einen Führungsboden gestützten, zinkenförmigen Anformungen 122 des benachbarten Förderelementes 121 optimal geführt sind.

Das Tragelement 121 weist analog zum Ausführungsbeispiel nach Figur 1 bis 3 zwei voneinander quer zur Längsrichtung beabstandet angeordnete Rasthaken 124 mit jeweils einer Rastnase 125 auf. Die Verbindung von Tragelement 121 und Kettenglied 102 geschieht auf gleiche Weise wie in Figur 1 bis 3. Am Tragelement 121 sind ferner jeweils zwei Werkzeugöffnungen 126 im Bereich der Rasthaken 124 vorgesehen. Durch die Werkzeugöffnungen 126 kann nun ein Werkzeug, z. B. ein zangenförmiges Werkzeug mit Klemm- oder Spreizschenkeln eingeführt werden, mittels welchem die beiden Rasthaken 124 seitlich weg gebogen und so die Verhakung gelöst werden kann.

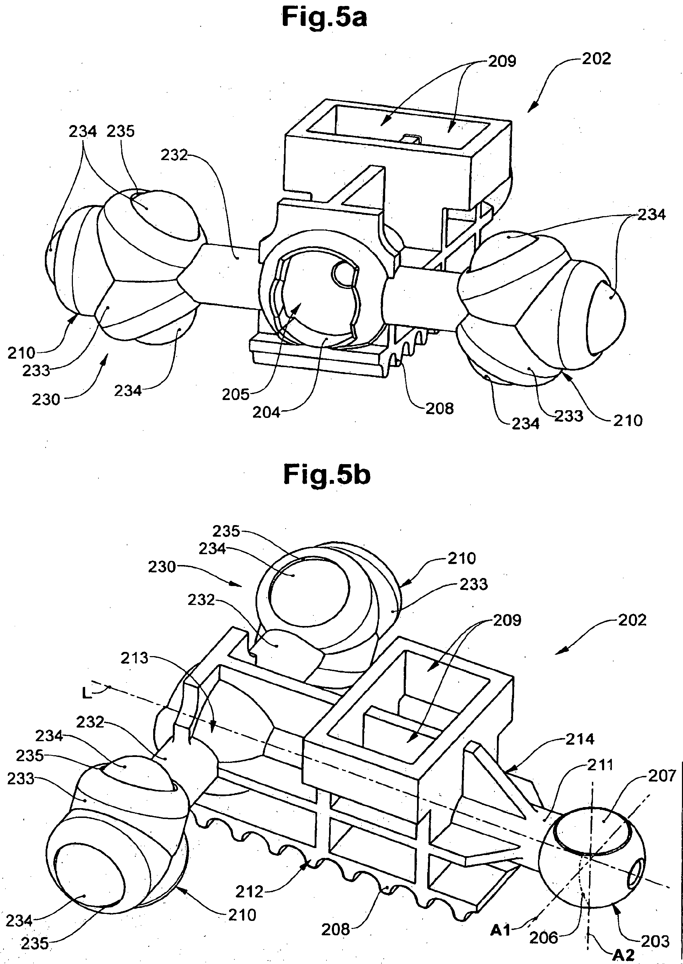

Die Figuren 5a und 5b zeigen eine weitere Ausführungsform eines Kettengliedes 202 mit einer erfindungsgemässen Gelenkverbindung, wobei sich das Kettenglied 202 dieser Ausführungsform lediglich durch die Ausbildung der Laufrollen 210 und deren Anbindung an das Kettenglied 202 unterscheidet. Daher werden die übereinstimmenden Merkmalen zwischen den zwei genannten Ausführungsformen von Kettengliedern 2, 202 und deren Funktionalitäten nachfolgend nicht mehr im Detail beschrieben. Es wird vielmehr auf die entsprechenden Ausführungen zu den Figuren 1 bis 3 verwiesen.

Das Kettenglied 202 weist ebenfalls zwei beidseitig von diesem angeordnete Laufrollen 210 auf. Die Gelenkpfanne 205 als Teil eines ersten Endabschnittes 213 und der Gelenkkopf 203 mit abgeflachten Seiten 207 als Teil eines zweiten Endabschnittes 214 sind ebenfalls über einen Mittelabschnitt 212 miteinander verbunden. Die Gelenkpfanne 205 ist auch hier so ausgelegt, dass diese den Gelenkkopf 203 des benachbarten Kettengliedes 202 über seinen Äquator 206 hinaus umfasst. Der Mittelabschnitt 212 ist in bekannter Weise kastenförmig mit zwei seitlichen Hohlkammern 209 ausgebildet, welche als Steckaufnahmen dienen. Die Steckverbindung erfolgt gleich wie bereits in Figur 1 bis 3 beschrieben, auf welche diesbezüglich verwiesen wird. Das Kettenglied 202 weist ebenfalls eine Zahnung 208 auf, welche sich ebenfalls vom ersten Endabschnitt 213 mit der Gelenkpfanne 205 über den Mittelabschnitt 212 bis hin zum zweiten Endabschnitt 214 mit dem Gelenkkopf 203 erstreckt.

Die Laufrolle 210 gemäss vorliegender Ausführungsform enthält einen Rollenkörper 230, welcher drei Kugelkörper 234 umfasst, die in Ausnehmungen 235 eines Wälzkörperkäfigs 233 angeordnet sind. Die Kugelkörper 234 stützen sich im Wälzkörperkäfig 233 gegenseitig ab und bilden nach aussen einen Auflagepunkt zur rollenden Führung und Abstützung des Rollenkörpers 230 aus. Der Auflagepunkt zur Führungsschiene (nicht gezeigt) liegt jeweils im Bereich eines Kugelsegmentes des Kugelkörpers 234, welches aus dem Wälzkörperkäfig 233 herausragt. Der Wälzkörperkäfig 233 enthält entsprechende Ausnehmungen 235 zur Aufnahme und drehbaren Halterung der Kugelkörper 234, wobei die Ausnehmungen 235 bzw. deren Öffnungen so ausgestaltet sind, dass die Kugelkörper 234 nicht aus dem Wälzkörperkäfig 233 herausfallen können. Die Kugelkörper 234 im Wälzkörperkäfig 233 sind in einer durch die beiden Schwenkachsen A1 und A2 in unverschwenkter Position der Kettenglieder 202 aufgespannten Ebene angeordnet, wobei zwei benachbarte Kugelkörper 234 jeweils einen Winkel von 120° einschliessen.

Die Rollenkörper 230 sind jeweils über einen starren Achsarm 232, auch Verbindungsarm genannt, seitlich am Kettenglied 202 angebracht. Die Achsarme 232 sind hier parallel zur ersten Schwenkachse A1 ausgebildet. Sie können aber auch anders ausgerichtet sein. Der Wälzkörperkäfig 233 kann über den Achsarm 232 auf das Kettenglied 202 aufgesteckt sein. Es ist jedoch auch möglich, dass der Wälzkörperkäfig 233 zusammen mit dem Kettenglied 202 und dem Achsarm 232 einteilig ausgebildet sind. Dies unabhängig von der konkreten Ausgestaltung des Röllenkörpers 230 und des Kettengliedes. Die Rollenkörper 230 werden bei der Erstellung des Rollenkörpers 230 durch Öffnungen in die Ausnehmungen 235 des Wälzkörperkäfigs 233 hinein gepresst.

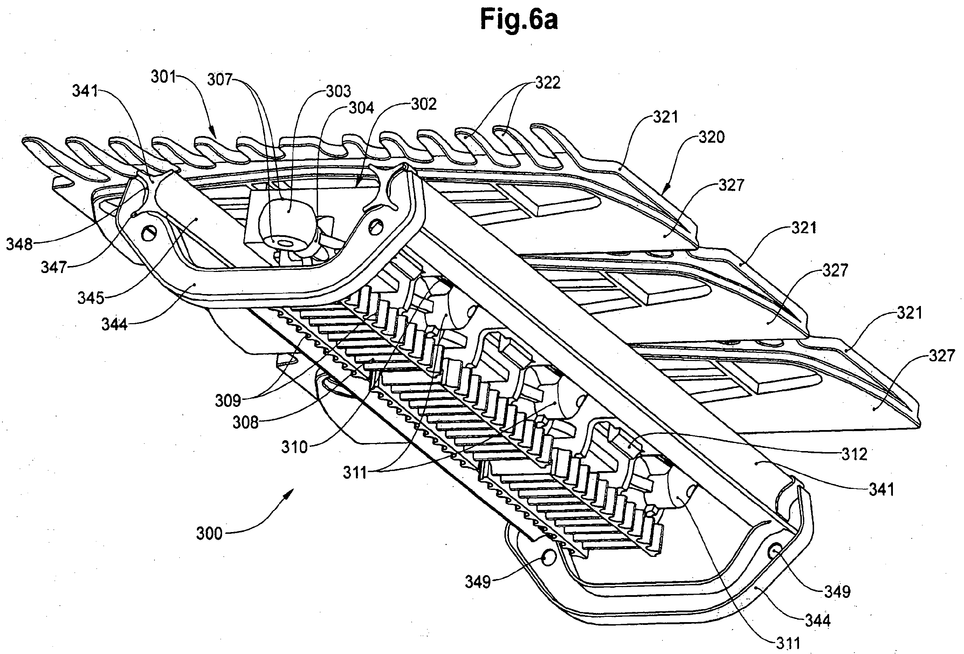

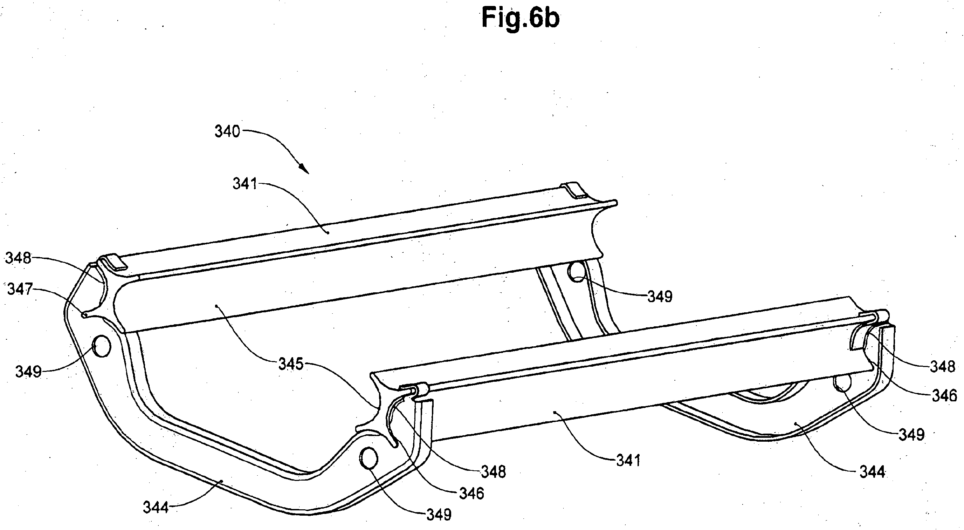

Die Figuren 6a und 6b zeigen eine weitere Ausführungsform einer Fördereinrichtung 300, umfassend eine Fördermittel 301, welches sich aus einem Förderorgan 320 und einer Förderkette zusammensetzt, sowie eine Längsführungseinrichtung 340, über welche das Fördermittel 301 entlang eines Förderweges geführt ist. Das Förderorgan 320 ist analog zum Förderorgan 120 nach Figur 4a ausgebildet und wird daher an dieser Stelle nicht mehr in allen Details beschrieben. Das Förderorgan 320 setzt sich ebenfalls aus einzelnen Förderelementen 321 zusammen, welche über zinkenförmige Anformungen 322 kämmend ineinander greifen. Auf der einen Seite des Förderelementes 321 werden die eingreifenden, zinkenförmigen Anformungen 322 des benachbarten Förderelementes 321 durch einen Führungsboden 327 geführt. Die Förderelemente 321 sind in bereits beschriebener Art und Weise über Rasthaken 312 mit den Kettengliedern 302 verbunden.

Die Förderkette ist aus erfindungsgemässen Kettengliedern 302 zusammengesetzt. Die Kettenglieder 302 entsprechen im Wesentlichen und bezüglich der Gelenkverbindung vollständig dem Kettenglied 102 gemäss Figur 4b. Der einzige Unterschied liegt darin, dass die vorliegenden Kettenglieder 302 zusätzlich zu einer, auf der Gegenseite angebrachten Zahnung 308 jeweils eine seitliche Zahnung 309 aufweisen, welche beidseitig vom Kettenglied 302 zu den Führungsschienen 341 der Längsführungseinrichtung 340 hin gerichtet angeordnet ist. Diese seitliche Zahnung 309 hat den Vorteil, dass die Förderkette von beiden Seiten über die Zahnung 309 angetrieben werden kann. Der Antrieb erzeugt hierbei mit seiner beidseitig angreifenden Antriebszahnung nicht nur eine Andrückkraft auf die seitliche Zahnung 309 des Fördergliedes, sonden gleichzeitig auch die notwendige Gegenkraft auf der gegenüber liegenden Seite, welche verhindert, dass das Fördermittel 301 der Andrückkraft ausweicht.

Das Kettenglied 302 weist ferner ebenfalls eine Steck-Dreh-Verbindung mit einem Gelenkkopf 303 mit abgeflachten Seiten 307 auf, welcher in eine Gelenkpfanne am benachbarten Kettenglied eingreift (nicht gezeigt). Der Gelenkkopf 303 ist über einen Halsabschnitt 304 mit dem Grundkörper des Kettengliedes 302 verbunden. In analoger Weise zu Figur 3 enthält das Kettenglied 302 ferner Laufrollen 310, die über abgewinkelte Achsarme 311 seitlich am Kettenglied 302 drehbar befestigt sind.

Die Längsführungseinrichtung 340 ist ebenfalls aus zwei parallel nebeneinander geführten Führungsschienen 341 ausgebildet, welche über Querverbindungselemente 344 miteinander verbunden sind. Die Querverbindungselemente 344 sind hier U-förmig ausgebildet und weisen eine U-förmige Querschnittsform auf, welche zur Steifigkeit und Biegefestigkeit beiträgt. Die Querverbindungselemente 344 weisen an ihren freien Endabschnitten jeweils eine schlitzförmige Ausnehmung 346 auf, in welche ein Einschubstreifen 347 der Führungsschiene 341 eingeschoben und über eine Schweissverbindung 348 fixiert ist. Die Längsführungseinrichtung 340 lässt sich über Befestigungsöffnungen 349 an den Querverbindungselementen 344 an Halterungen (nicht gezeigt) befestigen. Die Führungsschiene 341 weist eine Lauffläche 345 auf, entlang welcher die Laufrolle 310 abrollt. Die Lauffläche 345 ist in Form eines im Querschnitt bogenförmigen, konkaven Führungskanals ausgebildet.

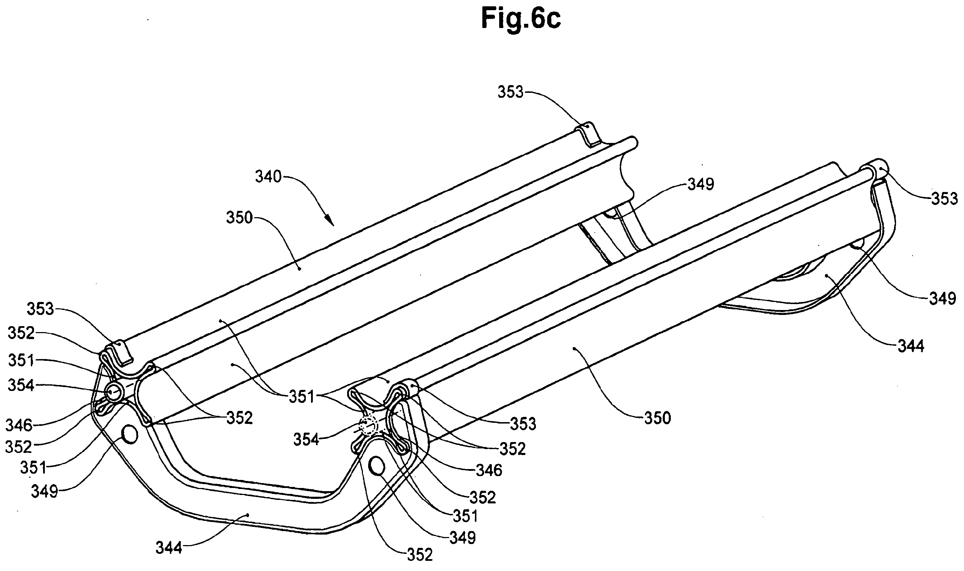

Figur 6c zeigt eine weitere Ausführungsform einer Längsführungseinrichtung 340. Die Längsführungseinrichtung 340 in Figur 6c umfasst dieselben Querverbindungselemente 344 wie die Längsführungseinrichtung 340 in Figur 6b. Im Gegensatz zu den Führungsschienen 341 in Figur 6b sind in Figur 6c aber umgeformte Führungsschienen 350 über die Querverbindungselemente 344 verbunden. Die umgeformten Führungsschienen 350 bestehen jeweils aus einem ursprünglich rotationssymmetrischen Metallrohr mit von rundem Querschnitt und einer Wandstärke von beispielsweise 0.5 mm bis 5 mm, dessen Querschnitt mechanisch plastisch umgeformt wurde.

Die umgeformten Führungsschienen 350 weisen einen punktsymmetrischen und x-förmigen Querschnitt mit vier identisch geformten Aussenseitenbereichen des Querschnitts auf. Jeder der vier Aussenseitenbereiche weist einen Abschnitt auf, welcher als Lauffläche 351 benutzt werden kann. Dieser Abschnitt bzw. diese Lauffläche 351 ist in Form eines im Querschnitt bogenförmigen, konkaven Führungskanals ausgebildet.

Zwischen den Laufflächen 351 der umgeformten Führungsschienen 350 sind Einschubstreifen 352 ausgebildet, welche in die schlitzförmigen Ausnehmungen 346 der Querverbindungselemente 344 eingeschoben und durch Befestigungsmittel (353) in Form von Haltelaschen beispielsweise kraftschlüssig und/oder formschlüssig fixiert sind. Die Haltelaschen (353) sind wiederholt lösbar und fixierbar und erlauben eine einfache Entnahme und ein einfaches Einschieben der Einschubstreifen 352 in die schlitzförmigen Ausnehmungen 346. Dadurch können die umgeformten Führungsschienen 350 rasch und einfach an den Querverbindungselementen 344 befestigt und rasch und einfach von den Querverbindungselementen 344 getrennt werden. Auf diese Weise können einfach und rasch die umgeformten Führungsschienen 350 der Längsführungseinrichtung 340 ersetzt werden, beispielsweise bei Verschleiss oder einem Defekt. Die Führungsschienen 350 werden nun aus einer Mehrzahl von Umformprofilen, welche analog zur Ausführungsform nach Figur 6b aneinander stossend hintereinander angeordnet und an den Querverbindungselementen 344 befestigt sind, ausgebildet (nicht gezeigt). Damit die im Bereich des Profilstosses möglichst kein Versatz zwischen den Umformprofilen auftritt, sind gemäss Ausführungsform nach Figur 6c stab- bzw. rohrförmige Zentriermittel 354 vorgesehen, welche in den Endabschnitten der aneinander stossenden Umformprofile in einen zentralen Profilhohlraum eingeschoben sind.

Durch die Ausbildung von vier Laufflächen 351 auf derselben umgeformten Führungsschiene 350 kann auch eine beispielsweise verschlissene oder beschädigte Lauffläche 351 einer umgeformten Führungsschiene 350 durch eine andere Lauffläche 351 derselben umgeformten Führungsschiene 350 ersetzt werden. Dazu wird beispielsweise die umgeformte Führungsschiene 350 von den Querverbindungselementen 344 getrennt, um eine Symmetrieachse des punktsymmetrischen Querschnitts der umgeformten Führungsschiene 350 gedreht, bis eine gewünschte Lauffläche 351 sich in einer Position befindet, in welcher sich die zu ersetzende Lauffläche 351 befunden hat, und anschliessend wieder mit den Querverbindungselementen 344 verbunden. Je nach Position der umgeformten Führungsschiene 350 stehen somit Teile der Förderkette - hier die Laufrollen 10 - mit je anderen Laufflächen (351) derselben umgeformten Führungsschiene 350 in Kontakt. Somit können alle vier Laufflächen 351 der umgeformten Führungsschiene 350 benutzt werden, was in einer viermal längeren Lebensdauer im Vergleich zu einer Führungsschiene mit nur einer Lauffläche resultiert.

Die vorangehenden Ausführungen betreffend Form, Fixieren, Lösen und Nutzung von umgeformten Führungsschienen 350 gelten natürlich auch für nicht umgeformte aber äusserlich gleich gestaltete Führungsschienen 341.

Selbstverständlich können die beschriebenen Rollenkörper gemäss den Figuren 1 bis 6 auch am Förderorgan bzw. den Förderelementen (nicht gezeigt) z. B. über einen Verbindungsarm befestigt sein.

Es sei an dieser Stelle ausdrücklich darauf hingewiesen, dass die Ausführung der Gelenkverbindung gemäss den oben beschriebenen Ausführungsbeispielen nicht an die Ausbildung des Fördermittels, der Verbindungsmittel zum Fördermittel, den Laufrollen und deren Anbindung an das Fördermittel oder eine Zahnung gebunden sind, sondern auch in anders ausgebildeten Kettengliedern bzw. Fördermitteln Einsatz finden können. Ferner sind auch das Merkmal der Werkzeugöffnungen in den Tragelementen und die dazugehörigen Steckverbindungen nicht an eine spezifische Ausführungsform einer Gelenkverbindung, eines Förderelementes oder einer Laufrolle gebunden.

Die nachfolgend aufgeführten Ausführungsvarianten spezifischer Konstruktionsaspekte am Fördermittel können daher beliebig miteinander kombiniert werden:
- Befestigung der Laufrollen am Förderorgan oder an den Kettengliedern;
- Ausbildung der Laufrollen;
- Ausbildung der Gelenkverbindung;
- Ausbildung des Förderorgans bzw. der Förderelemente;
- Verbindung der Förderelemente mit den Kettengliedern;
- Ausbildung der Längsführungseinrichtung.

## Patentansprüche

1. Förderkette für ein Fördermittel (1, 101) einer Fördereinrichtung, enthaltend eine Mehrzahl von miteinander verbundenen Kettengliedern (2, 102, 202), wobei die Kettenglieder (2, 102, 202) über Gelenkverbindungen jeweils um eine erste Achse (A1) und um eine, senkrecht zur ersten Achse (A1) ausgerichteten zweiten Achse (A2) schwenkbar miteinander zur Förderkette verbunden sind, und die Kettenglieder (2, 102, 202) jeweils an einem ersten Endabschnitt eine Aufnahme (5, 205) in Form einer Gelenkpfanne und an einem zweiten Endabschnitt einen, in die Aufnahme (5, 205) eines benachbarten Kettengliedes (2, 102, 202) eingreifenden Kupplungskörper (3, 203) in Form eines Gelenkkopfes aufweisen,
**dadurch gekennzeichnet, dass**
der Gelenkkopf (3, 203) eine kugelförmige Grundform mit zwei gegenüber liegenden, abgeflachten Seiten (7, 207) aufweist, und die Gelenkpfanne (5, 205) eine schlitzartige Einführöffnung (4, 204) zur Aufnahme des Gelenkkopfs (3, 203) aufweist, wobei die Breite der schlitzartigen Einführöffnung (4, 204) an die Breite des Gelenkkopfes (3, 203) zwischen den beiden abgeflachten Seiten (7, 207) angepasst ist, derart, dass Gelenkpfanne (5, 205) und Gelenkkopf (3, 203) zur Ausbildung der Gelenkverbindung mittels einer Steck-Dreh-Bewegung miteinander verbunden werden können.

2. Förderkette nach Anspruch 1, **dadurch gekennzeichnet, dass** das Kettenglied (2, 102, 202) ein aus mehreren verschiedenen Kunststoffwerkstoffen hergestelltes Mehrkomponenten-Kettenglied ist.

3. Förderkette nach Anspruch 1 oder 2, **dadurch gekennzeichnet, dass** die Förderkette bezüglich Formgebung aus baugleichen Kettengliedern (2, 102, 202) aufgebaut ist.

4. Förderkette nach Anspruch 3, **dadurch gekennzeichnet, dass** die Gelenkpfanne (5, 205) den Gelenkkopf (3, 203) über dessen Äquator (6, 206) hinaus umgreift.

5. Förderkette nach Anspruch 1 oder 4, **dadurch gekennzeichnet, dass** die schlitzartige Einführöffnung (4, 204) und der Gelenkkopf (3, 203) so ausgestaltet sind, dass der Gelenkkopf (3, 203) und somit das dazugehörige Kettenglied (2, 102, 202) nur in einer bestimmten Winkelposition oder in einem bestimmten Winkelbereich relativ zum benachbarten Kettenglied (2, 102, 202) um die Längsachse (L) verdreht in die Gelenkpfanne (5, 205) des benachbarten Kettengliedes (2, 102, 202) einführbar ist.

6. Förderkette nach einem der Ansprüche 1 bis 5, **dadurch gekennzeichnet, dass**
der Gelenkkopf (3, 203) und die Gelenkpfanne (5, 205) und die schlitzartige Einführöffnung (4, 204) so gestaltet sind, dass zwei Kettenglieder (2, 102, 202) nur dann miteinander verbunden werden können, wenn diese in einem bestimmten Winkel im Bereich von 45° bis 90°, insbesondere von 90°, um ihre Längsachse (L) relativ zueinander verdreht sind.

7. Förderkette nach einem der Ansprüche 1 bis 6, **dadurch gekennzeichnet, dass** die Förderkette bezüglich Formgebung und Werkstoff aus baugleichen Kettengliedern (2, 102, 202) aufgebaut ist.

8. Förderkette nach einem der Ansprüche 1 bis 7, **dadurch gekennzeichnet, dass** die Kettenglieder (2, 102, 202) einteilig als Ein- oder Mehrkomponenten-Kettenglieder hergestellt sind.

9. Förderkette nach Anspruch 8, **dadurch gekennzeichnet, dass** der eine Kunststoffwerkstoff eine reibungsvermindernde Komponente, vorzugsweise PTFE (Polytetrafluorethylen), insbesondere PTFE in einer Menge von grösser 0 % und kleiner 20 % (Volumenprozent) enthält.

10. Förderkette nach einem der Ansprüche 1 bis 9, **dadurch gekennzeichnet, dass** die Förderkette mindestens zwei, vorzugsweise exakt zwei Ausführungsarten von gestaltgleichen Kettengliedern umfasst, welche bezüglich Werkstoff nicht baugleich sind, wobei Kettenglieder verschiedener Ausführungsarten abwechselnd in der Förderkette angeordnet sind.

11. Förderkette nach Anspruch 9 oder 10, **dadurch gekennzeichnet, dass** die Werkstoffe der, bezüglich Werkstoff nicht baugleichen Ausführungen von Kettengliedern verschiedene Reibungseigenschaften bzw. Reibungskoeffizienten aufweisen.

12. Förderkette nach Anspruch 11, **dadurch gekennzeichnet, dass** der eine Werkstoff ein Kunststoff mit einer reibungsvermindernde Komponente, vorzugsweise PTFE (Polytetrafluorethylen), insbesondere PTFE in einer Menge von grösser 0 % und kleiner 20 % (Volumenprozent) ist.

13. Förderkette nach einem der Ansprüche 1 bis 12, **dadurch gekennzeichnet, dass** das Kettenglied (2, 102, 202) mittels eines Spritzgiessverfahrens in einem oder mehreren Spritzgiessschritten hergestellt ist.

14. Kettenglied (2, 102, 202) für eine Förderkette nach einem der Ansprüche 1 bis 13, **dadurch gekennzeichnet, dass** das Kettenglied (2, 102, 202) jeweils an einem ersten Endabschnitt eine Aufnahme (5, 205) in Form einer Gelenkpfanne und an einem zweiten Endabschnitt einen Kupplungskörper (3, 203) in Form eines Gelenkkopfes aufweist,
**dadurch gekennzeichnet, dass**
der Gelenkkopf (3, 203) eine kugelförmige Grundform mit zwei gegenüber liegenden, abgeflachten Seiten (7, 207) aufweist, und die Gelenkpfanne (5, 205) eine schlitzartige Einführöffnung (4, 204) zum Einführen eines Gelenkkopfs (3, 203) aufweist, wobei die Breite der schlitzartigen Einführöffnung (4, 204) an die Breite des Gelenkkopfes (3, 203) zwischen den beiden abgeflachten Seiten (7, 207) angepasst ist, derart, dass der Gelenkkopf (3, 203) in die Gelenkpfanne (5, 205) eines ersten benachbarten, bezüglich Formgebung baugleichen Kettengliedes einführbar ist, und in die Gelenkpfanne (5, 205) der Gelenkkopf (3, 203) eines zweiten benachbarten, bezüglich Formgebung baugleichen Kettengliedes einführbar ist, und die Gelenkpfanne (5, 205) mit dem Gelenkkopf (3, 203) des ersten benachbarten Kettengliedes und der Gelenkkopf (3, 203) mit der Gelenkpfanne (5, 205) des zweiten benachbarten Kettengliedes mittels einer Steck-Dreh-Bewegung eine Gelenkverbindung eingehen können.

15. Kettenglied (2) nach Anspruch 14, **dadurch gekennzeichnet, dass** beidseits vom Kettenglied je eine Laufrolle (10) angeordnet ist, und die Laufrollen (10) jeweils eine Auflagestelle (34) zu einer Führungsschiene (41) ausbilden und die Auflagestellen (34) der zwei Laufrollen (10) zusammen mit der Gelenkverbindung auf einer gemeinsamen Geraden (V) liegen.

## Claims

1. A conveying chain for a conveying means (1, 101) of a conveying device, comprising a plurality of chain links (2, 102, 202) which are connected to one another, wherein the chain links (2, 102, 202) via joint connections are connected to one another in a manner pivotable in each case about a first axis (A1) and about a second axis (A2) aligned perpendicularly to
the first axis (A1), into a conveying chain, and
the chain links (2, 102, 202) in each case at a first end section comprise a receiver (5, 205) in
the form of a joint socket and at a second end section comprise a coupling body (3, 203) in the form of a joint head engaging into the receiver (5, 205) of an adjacent chain link (2, 102, 202),
**characterised in that**
the joint head (3, 203) has a spherical basic shape with two flattened sides (7, 207) which lie opposite one another, and the joint socket (5, 205) comprises a slot-like introduction opening (4, 204) for receiving the joint head (3, 203), wherein
the width of the slot-like introduction opening (4, 204) is adapted to the width of the joint head (3, 203) between the two flattened sides (7, 207), such that the joint socket (5, 205) and the joint head (3, 203) can be connected to one another by way of an insertion-rotation movement, for forming the joint connection.

2. A conveying chain according to claim 1, **characterised in that** the chain link (2, 102, 202) manufactured as a multi-component chain link from several different plastic materials.

3. A conveying chain according to claim 1 or 2, **characterised in that** the conveying chain with regard to shaping is constructed of constructionally identical chain links (2, 102, 202).

4. A conveying chain according to claim 3, **characterised in that** the joint socket (5, 205) encompasses the joint head (3, 203) beyond its equator (6, 206).

5. A conveying chain according to claim 1 or 4, **characterised in that** the slot-like introduction opening (4, 204) and the joint head (3, 203) are designed such that the joint head (3, 203) and thus the associated chain link (2, 102, 202) can only be introduced into the joint socket (5, 205) of the adjacent chain link (2, 102, 202) when rotated about the longitudinal axis (L) in a certain angular position or in a certain angular region relative to the adjacent chain link (2, 102, 202).

6. A conveying chain according to one of the claims 1 to 5, **characterised in that** the joint head (3, 203) and the joint socket (5, 205) and the slot-like introduction opening (4, 204) are designed such that two chain links (2, 102, 202) can only be connected to one another, if these are rotated relative to one another about their longitudinal axis (L) at a certain angle in the region of 45° to 90°, in particular 90°.

7. A conveying chain according to one of the claims 1 to 6, **characterised in that** the conveying chain is constructed of chain links (2, 102, 202) which are constructionally identical with regard to shaping and material.

8. A conveying chain according to one of the claims 1 to 7, **characterised in that** the chain links (2, 102, 202) are manufactured in a one-part manner as single-component or multi-component chain links.

9. A conveying chain according to claim 8, **characterised in that** the one plastic material contains a friction-reducing component, preferably PTFE (polytetrafluorethylene), in particular PTFE in a quantity of greater than 0 % and smaller than 20% (volume percent).

10. A conveying chain according to one of the claims 1 to 9, **characterised in that** the conveying chain has at least two, preferably exactly two embodiment types of identically shaped chain links, which are not constructionally identical with regard to the material, wherein chain links of different embodiment types are arranged in the conveying chain in an alternating manner.

11. A conveying chain according to claim 9 or 10, **characterised in that** the materials of the embodiments of chain links which are not constructionally identical with respect to material have different friction properties or different friction coefficients.

12. A conveying chain according to claim 11, **characterised in that** the one material is a plastic with a friction-reducing component, preferably PTFE (polytetrafluorethylene), in particular PTFE in a quantity of greater than 0% and smaller than 20% (volume percent).

13. A conveying chain according to one of the claims 1 to 12, **characterised in that** the chain link (2, 102, 202) is manufactured with an injection moulding method in one or more injection moulding steps.

14. A chain link (2, 102, 202) for a conveying chain according to one of the claims 1 to 13,
**characterised in that** the chain link (2, 102, 202) in each case at a first end section comprises a receiver (5, 205) in the form of a joint socket and at a second end section comprises a coupling body (3, 203) in the form of a joint head,
**characterised in that**
the joint head (3, 203) has a spherical basic shape with two flattened sides (7, 207) which lie opposite one another, and the joint socket (5, 205) comprises a slot-like introduction opening (4, 204) for introduction of a joint head (3, 203), wherein
the width of the slot-like introduction opening (4, 204) is adapted to the width of the joint head (3, 203) between the two flattened sides (7, 207), such that the joint head (3, 203) can be introduced into the joint socket (5, 205) of a first adjacent chain link constructionally identical with regard to shaping, and the joint head (3, 203) of a second adjacent chain link constructionally identical with regard to shaping can be introduced into the joint socket (5, 205), and
the joint socket (5, 205) can assume a joint connection with the joint head (3, 203) of the first adjacent chain link, and the joint head (3, 203) with the joint socket (5, 205) of the second adjacent chain link, by way of an insertion-rotation movement.

15. A chain link (2) according to claim 14, **characterised in that** a runner roller (10) is arranged in each case on both sides of the chain link, and the runner rollers (10) each form a support location (34) to a guide rail (41), and the support locations (34) of the two runner rollers (10) together with the joint connection lie on a common straight line (V).

## Revendications

1. Chaîne de transport pour un moyen de transport (1, 101) d'un dispositif de transport, contenant
plusieurs maillons de chaîne (2, 102, 202) reliés les uns aux autres,
les maillons de chaîne (2, 102, 202) étant reliés les uns aux autres par l'intermédiaire de liaisons articulées à pivotement autour d'un premier axe (A1) et autour d'un deuxième axe (A2) orienté perpendiculairement par rapport au premier axe (A1) de manière à former une chaîne de transport,
chacun des maillons de chaîne (2, 102, 202) présentant sur une première section d'extrémité un logement (5, 205) en forme de cuvette d'articulation et à une deuxième section d'extrémité un corps d'accouplement (3, 203) en forme de tête d'articulation qui s'engage dans le logement (5, 205) d'un maillon de chaîne (2, 102, 202) voisin,
**caractérisée en ce que**
la tête d'articulation (3, 203) présente une forme de base sphérique dotée de deux côtés opposés aplatis (7, 207),
**en ce que** la cuvette d'articulation (5, 205) présente une ouverture d'insertion (4, 204) en forme de fente permettant de recevoir la tête d'articulation (3, 203) ,
**en ce que** la largeur de l'ouverture d'insertion (4, 204) en forme de fente est adaptée à la largeur de la tête d'articulation (3, 203) entre les deux côtés aplatis (7, 207) de telle sorte que la cuvette d'articulation (5, 205) et la tête d'articulation (3, 203) puissent être reliées l'une à l'autre au moyen d'un déplacement d'enfichage et de rotation pour former la liaison articulée.

2. Chaîne de transport selon la revendication 1,
**caractérisée en ce que** le maillon de chaîne (2, 102, 202) est un maillon de chaîne à plusieurs composants fabriqués à partir de plusieurs matières synthétiques différentes.

3. Chaîne de transport selon les revendications 1 ou 2,
**caractérisée en ce que** la chaîne de transfert est formée à partir de maillons de chaîne (2, 102, 202) identiques.

4. Chaîne de transport selon la revendication 3,
**caractérisée en ce que** la cuvette d'articulation (5, 205) chevauche la tête d'articulation (3, 203) jusqu'au-delà de son équateur (6, 206).

5. Chaîne de transport selon les revendications 1 ou 4,
**caractérisée en ce que** l'ouverture d'insertion (4, 204) en forme de fente et la tête d'articulation (3, 203) sont configurées de telle sorte que la tête d'articulation (3, 203) et donc le maillon de chaîne (2, 102, 202) qui lui est associé ne peuvent être insérés dans la cuvette d'articulation (5, 205) du maillon de chaîne (2, 102, 202) voisin qu'en étant tournés autour de l'axe longitudinal (L) dans une position angulaire définie ou dans une plage angulaire définie par rapport au maillon de chaîne (2, 102, 202) voisin.

6. Chaîne de transport selon l'une des revendications 1 à 5, **caractérisée en ce que** la tête d'articulation (3, 203) et la cuvette d'articulation (5, 205) et l'ouverture d'insertion en forme de fente (4, 204) sont configurés de telle sorte que deux maillons de chaîne (2, 102, 202) ne peuvent être reliés l'un à l'autre que s'ils sont tournés l'un par rapport à l'autre autour de leur axe longitudinal (L) sur un angle défini compris dans la plage de 45° à 90° et en particulier de 90°.

7. Chaîne de transport selon l'une des revendications 1 à 6, **caractérisée en ce que** la chaîne de transport est formée de maillons de chaîne (2, 102, 202) identiques en termes de forme et de matériau.

8. Chaîne de transport selon l'une des revendications 1 à 7, **caractérisée en ce que** les maillons de chaîne (2, 102, 202) sont réalisés d'une seule pièce comme maillons de chaîne à un ou plusieurs composants.

9. Chaîne de transport selon la revendication 8,
**caractérisée en ce qu'**une des matières synthétiques contient un composant diminuant le frottement, de préférence du PTFE (polytétrafluoroéthylène) et en particulier du PTFE à raison de plus de 0 % et de moins de 20 % (pourcentages en volume).

10. Chaîne de transport selon l'une des revendications 1 à 9, **caractérisée en ce que** la chaîne de transport comporte au moins deux et de préférence exactement deux modes de réalisation de maillons de chaîne de même configuration mais non identiques en termes de matériau, des maillons de chaîne de types différents étant disposés en alternance dans la chaîne de transport.

11. Chaîne de transport selon les revendications 9 ou 10, **caractérisée en ce que** les matériaux des modes de réalisation de maillons de chaîne non identiques en termes de matériau présentent différentes propriétés de frottement ou différents coefficients de frottement.

12. Chaîne de transport selon la revendication 11,
**caractérisée en ce que** l'un des matériaux est une matière synthétique qui présente un composant diminuant le frottement, de préférence le PTFE (polytétra-fluoroéthylène) et en particulier du PTFE à raison de plus de 0 % et de moins de 20 % (pourcentages en volume).

13. Chaîne de transport selon l'une des revendications 1 à 12, **caractérisée en ce que** le maillon de chaîne (2, 102, 202) est réalisé par une opération de moulage par injection en une ou plusieurs étapes de moulage par injection.

14. Maillon de chaîne (2, 102, 202) pour chaîne de transport selon l'une des revendications 1 à 13, **caractérisé en ce que** chaque maillon de chaîne (2, 102, 202) présente sur une première section d'extrémité un logement (5, 205) qui présente la forme d'une cuvette d'articulation et sur une deuxième section d'extrémité un corps d'accouplement (3, 203) qui présente la forme d'une tête d'articulation,
**caractérisé en ce que**
la tête d'articulation (3, 203) présente une forme de base sphérique dotée de deux côtés opposés aplatis (7, 207),
**en ce que** la cuvette d'articulation (5, 205) présente une ouverture d'insertion (4, 204) en forme de fente permettant de recevoir la tête d'articulation (3, 203) ,
**en ce que** la largeur de l'ouverture d'insertion (4, 204) en forme de fente est adaptée à la largeur de la tête d'articulation (3, 203) entre les deux côtés aplatis (7, 207) de telle sorte que la tête d'articulation (3, 203) puisse être insérée dans la cuvette d'articulation (5, 205) d'un premier maillon de chaîne voisin et de même forme, la tête d'articulation (3, 203) d'un deuxième maillon de chaîne de même forme et voisin pouvant être inséré dans la cuvette d'articulation (5, 205), la cuvette d'articulation (5, 205) et la tête d'articulation (3, 203) du premier maillon de chaîne voisin et la tête d'articulation (3, 203) et la cuvette d'articulation (5, 205) du deuxième maillon de chaîne voisin pouvant entrer en liaison articulée au moyen d'un déplacement d'enfichage et de rotation.

15. Maillon de chaîne (2) selon la revendication 14,
**caractérisé en ce que** des deux côtés de chaque maillon de chaîne est disposé un galet de roulement (10), chacun des galets de roulement (10) formant un emplacement de placement sur un rail de guidage (41) et les emplacements de placement (34) des deux galets de guidage (10) étant situés sur une droite commune, de même que la liaison articulée.
